# EUROPÄISCHE PATENTSCHRIFT

(11) **EP 2 035 112 B1**
(45) Veröffentlichungstag und Bekanntmachung des Hinweises auf die Patenterteilung: **28.10.2009**
(21) Anmeldenummer: 07729923.8
(22) Anmeldetag: 06.06.2007
(51) Int. Cl.: B01D 39/16, C09D 161/00, C08J 9/28

(54) **PORÖSES MATERIAL MIT NANOPORÖSER BESCHICHTUNG**
POROUS MATERIAL WITH A NANOPOROUS COATING
MATÉRIAU POREUX POURVU D'UNE COUCHE DE REVÊTEMENT NANOPOREUSE

(30) Priorität: 20.06.2006 EP 06115723; 31.08.2006 EP 06119896; 05.04.2007 EP 07105727
(43) Veröffentlichungstag der Anmeldung: 18.03.2009
(73) Patentinhaber: BASF SE, 67056 Ludwigshafen (DE)
(72) Erfinder: SCHÄDLER, Volker, 67487 Maikammer (DE); FRICKE, Marc, 24850 Lürschau (DE); DU FRESNE VON HOHENESCHE, Cedric, 8934 CW Leeuwarden (NL); ROSER, Joachim, 68161 Mannheim (DE)
(86) Internationale Anmeldenummer: PCT/EP2007/055548
(87) Internationale Veröffentlichungsnummer: WO 2007/147730

(56) Entgegenhaltungen:
- EP-A- 1 479 734
- DE-A1-102004 014 287
- US-A1- 2003 215 626
- MAHLTIG B ET AL: "VEREDLUNG VON TEXTILIEN DURCH NANOSOL-BESCHICHTUNGEN" MELLIAND TEXTILBERICHTE, INTERNATIONAL TEXTILE REPORTS, MELLIAND TEXTILBERICHTE, FRANKFURT AM MAIN, DE, Bd. 83, Nr. 4, April 2002 (2002-04), Seiten 251-253, XP001085513 ISSN: 0341-0781

## Beschreibung

Die Erfindung betrifft ein poröses Material enthaltend ein Substrat auf Basis mindestens eines organischen Polymers A und eine Beschichtung, wobei
i) das unbeschichtete Substrat auf Basis des organischen Polymers A makroporös ist,
ii) die Oberfläche des makroporösen Substrats mit einem Polymer B auf Basis von Reaktivharzen beschichtet ist, und
iii) diese Beschichtung mit einem Polymer B nanoporös ist und der mittlere Durchmesser der Nanoporen maximal 1000 nm beträgt
   und wobei Aufzeichnungsmaterialien ausgenommen sind.

Die Erfindung betrifft außerdem ein poröses Material enthaltend ein Substrat auf Basis mindestens eines organischen Polymers A und eine Beschichtung, wobei
i) das Substrat auf Basis des mindestens einen organischen Polymers A makroporös und offenzellig ist,
ii) die Porenoberfläche des Substrats mit mindestens einem Polymer B auf Basis von Reaktivharzen beschichtet ist, und
iii) die Beschichtung mit mindestens einem Polymer B nanoporös ist und der mittlere Durchmesser der Nanoporen maximal 1000 nm beträgt und die mittlere Schichtdicke der Beschichtung kleiner ist als der mittlere Porendurchmesser des unbeschichteten Substrats.

Außerdem betrifft die Erfindung ein Verfahren zur Herstellung des porösen Materials sowie die Verwendung des porösen Materials als Filter für Gase oder Flüssigkeiten.

Schließlich betrifft die Erfindung Filter enthaltend das poröse Material, sowie ein Verfahren zur Filtration von Gasen oder Flüssigkeiten.

Filter dienen zur Abtrennung von Feststoffen aus Flüssigkeiten oder Gasen, indem sie die suspendierten Feststoffe beim Hindurchleiten der fluiden Phase mechanisch zurückhalten. Mit abnehmendem Durchmesser der Filterporen nimmt das Rückhaltevermögen und damit die Trennleistung des Filters zu, da auch Feststoffpartikel kleineren Durchmessers zurückgehalten werden. Allerdings nimmt mit kleinerem Filterporendurchmesser auch der Durchflusswiderstand des Filters zu, messbar beispielsweise als Druckverlust entlang des Filters, und die Filterporen verstopfen schneller, was die Standzeit des Filters reduziert. Um das Rückhaltevermögen einerseits und den Druckverlust bzw. die Standzeit andererseits zu optimieren, kann man hintereinandergeschaltete Filter mit Grobfilter, Feinfilter und ggf. Feinstfilter verwenden, allerdings ist dies apparativ aufwändiger.

Unter Filtern sollen hier auch solche für die Abtrennung von feinverteilten Flüssigkeiten (Tropfen, Tröpfchen) aus Gasen verstanden werden, wie sie bei Aerosolen oder Nebeln vorliegen.

Die Patentschrift US 5 470 612 offenbart eine Fangvorrichtung (getter) für Verunreinigungen, die in optischen Geräten von Satelliten oder bei der Halbleiterherstellung auftreten und zu vermeiden sind. Die Fangvorrichtung besteht aus einem Metallnetz, das mit einem porösen Aerogel niedriger Dichte beschichtet ist. Das Aerogel wird in einem Sol-Gel-Prozess hergestellt und besteht bevorzugt aus SiO₂ oder auch Resorcin-Formaldehyd oder Melamin-Formaldehyd. Andere Substrate als das Metallnetz werden nicht erwähnt.

Mahltig et al. beschreiben in J. Mater. Chem. 15, 4385-4398 (2005) die Funktionalisierung von Textilien oder Sieben aus beispielsweise Polyester, Baumwolle oder Polyamid durch Beschichten mit Nanopartikeln aus SiO₂ oder anderen Metalloxiden, wobei die Nanopartikel in einem Sol-Gel-Verfahren erhalten wurden. Porositäten, sowie Beschichtungen aus organischen Polymeren werden nicht erwähnt.

Die deutsche, nicht vorveröffentlichte Patentanmeldung "Papiere für Ink-Jet", Aktenzeichen 102005059321.6 vom 09.12.05 beschreibt Aufzeichnungsmaterialien (Papier), die mit einem organischen getrockneten Gel aus z.B. Phenol-Aldehyd-Harz oder Amino-Aldehyd-Harz beschichtet sind. Die Gelschicht ist eine Farbempfangsschicht für den Tintenstrahldruck und kann Poren aufweisen, insbesondere solche < 10 µm, beispielsweise von 10 nm bis 1 µm Durchmesser. Die Schrift erwähnt keinerlei Verwendung als Filter oder zur Filtration. Bei der hier vorliegenden Erfindung sind Aufzeichnungsmaterialien ausgeschlossen.

David J. Pine und Bradley F. Chmelka von der University of Califomia in Santa Barbara, USA, beschreiben in einem Internetjournal unter der Internetadresse http://www.solgel.com/articles/june01/pine.asp in dem Artikel "Hierarchicatty Ordered Nanoporous-Macroporous Materials" am Ende des viertletzten Absatzes einen makroporösen Polystyrolschaum, der als Gerüst für ein darin aufgenommenes Silica/Blockcopolymer dient. Durch Verfestigen und Calcinieren werden meso/makroporöse Silica-Monolithe erhalten.

Die bisher zur Abtrennung von Feststoffen aus Flüssigkeiten oder Gasen, bzw. von Flüssigkeiten aus Gasen, verwendeten Filtermaterialien sind insbesondere für anspruchsvolle Filtrationsaufgaben nicht immer zufriedenstellend. Insbesondere ist das Rückhaltevermögen nicht in allen Fällen zufriedenstellend, und der Druckverlust ist zu hoch bzw. die Standzeit zu gering.

Es bestand die Aufgabe, den geschilderten Nachteilen abzuhelfen. Insbesondere sollten als Filter einsetzbare poröse Materialien bereit gestellt werden, die sich auf einfache Weise herstellen lassen. Die Materialien sollten sich bei Ihrer Verwendung als Filter durch ein gutes Rückhaltevermögen, einen geringen Druckverlust und eine hohe Standzeit auszeichnen.

Gemäß einer weiteren Aufgabe sollte das poröse Material in seiner Porenstruktur so aufgebaut sein, dass es als Filtermaterial für Aerosole geeignet ist. Das poröse Material sollte die Filtereigenschaften von makroporösen und nanoporösen Materialien kombinieren.

Demgemäß wurde das eingangs definierte poröse Material gefunden. Außerdem wurde ein Verfahren zu seiner Herstellung gefunden sowie die Verwendung des Materials als Filter. Weiterhin wurden die genannten Filter enthaltend das Material gefunden, sowie das erwähnte Verfahren zur Filtration. Bevorzugte Ausführungsformen sind den Unteransprüchen sowie der Beschreibung zu entnehmen. Kombinationen bevorzugter Ausführungsformen verlassen den Rahmen der vorliegenden Erfindung nicht. Alle Druckangaben sind Absolutdrucke, sofern nicht anders angegeben.

### Makroporöses Substrat

Das erfindungsgemäße poröse Material enthält ein Substrat auf Basis mindestens eines organischen Polymers A, wobei das noch unbeschichtete Substrat makroporös ist, dessen Oberfläche mit einem Polymer B auf Basis von Reaktivharzen beschichtet ist, wobei die Beschichtung nanoporös ist und einen mittleren Porendurchmesser von maximal 1000 nm aufweist und wobei Aufzeichnungsmaterialien ausgenommen sind.

In einer bevorzugten Ausführungsform ist das Substrat auf Basis mindestens eines organischen Polymers A makroporös und offenzellig und die Porenoberfläche des Substrats ist mit mindestens einem Polymer B auf Basis von Reaktivharzen, bevorzugt ausgehend von einer Gelvorstufe, beschichtet. Gemäß dieser bevorzugten Ausführungsform ist die Beschichtung nanoporös, wobei die mittlere Schichtdicke (Zahlenmittel) der Beschichtung kleiner ist als der mittlere Porendurchmesser des unbeschichteten Substrats (volumengewichtetes Mittel).

Makroporös bzw. Makropore bedeutet im Rahmen der vorliegenden Erfindung, dass der mittlere Porendurchmesser mehr als 1 µm (1000 nm), bevorzugt mehr als 10 µm, besonders bevorzugt mehr als 50 µm beträgt, bestimmt durch Quecksilberintrusionsmessung nach DIN 66133. Der so bestimmte Wert ist ein volumengewichteter mittlerer Porendurchmesser.

Makroporös bedeutet im Rahmen dieser Erfindung bevorzugt, dass der volumengewichtete mittlere Porendurchmesser mehr als 1 µm (1000 nm), bevorzugt mehr als 10 µm, besonders bevorzugt mehr als 50 µm beträgt, bestimmt durch Quecksilberintrusionsmessung nach DIN 66133.

Nanoporös bzw. Nanopore bedeutet im Rahmen der vorliegenden Erfindung, dass der mittlere Porendurchmesser höchstens 1 µm (1000 nm), bevorzugt maximal 500 nm, besonders bevorzugt maximal 300 nm beträgt, bestimmt mittels Rasterelektronenmikroskopie und anschließender bildanalytischer Auswertung an mindestens 50 Poren. Der so bestimmte mittlere Porendurchmesser ist ein zahlengewichtetes Mittel.

Nanoporöse Beschichtung bedeutet im Rahmen dieser Erfindung bevorzugt, dass der zahlenmittlere Porendurchmesser der Beschichtung höchstens 1 µm (1000 nm), bevorzugt maximal 500 nm, besonders bevorzugt maximal 300 nm beträgt, bestimmt mittels Rasterelektronenmikroskopie und anschließender bildanalytischer Auswertung an mindestens 50 Poren.

Die Quecksilber-Intrusionsmessung nach DIN 66133 ist eine porosimetrische Methode und erfolgt üblicherweise in einem Porosimeter. Dabei wird Quecksilber in eine Probe des porösen Materials gepresst. Kleine Poren erfordern einen höheren Druck, um mit dem Quecksilber gefüllt zu werden als große Poren, und aus dem entsprechenden Druck/Volumen-Diagramm kann man eine Porengrößenverteilung bestimmen.

Insbesondere bei Materialien mit geringer Kompressionsstärke (siehe Scherer et al., J. Non-Cryst. Solids, 1995, 186, 309-315) kann man zusätzlich die spezifische Oberfläche nach BET (Brunauer, Emmet, Teller) nach DIN 66131 bestimmen.

Offenzellig bedeutet bei Schäumen, dass die Mehrzahl der Schaumzellen nicht geschlossen, sondern miteinander verbunden ist. Der Volumenanteil der Poren, die nicht miteinander verbunden, sondern geschlossen sind (nicht-offenzelliger oder geschlossenzelliger Anteil) beträgt bei offenzelligen Schäumen bevorzugt weniger als 50 Vol.-%. Besonders bevorzugt beträgt der nicht-offenzellige Volumenanteil der Poren bei offenzelligen Schäumen höchstens 30 Vol.-%, beispielsweise höchstens 20 Vol.-%, und insbesondere höchstens 10 Vol.-%.

Unter dem mittleren Porendurchmesser ist im Falle der offenzelligen Schäume vorzugsweise die mittlere Größe der durch Wände und/oder Stege begrenzten Poren zu verstehen. Die Bestimmung des mittleren Porendurchmessers erfolgt als volumengewichteter Mittelwert mittels Quecksilberintrusionsmessung nach DIN 66133, worauf sich die in dieser Erfindung angegebenen Porendurchmesser der unbeschichteten Substrate beziehen.

Geeignete Schäume haben als Substrat, d.h. vor der Beschichtung mit dem nanoporösen Reaktivharz, je nach chemischer Zusammensetzung (siehe weiter unten) üblicherweise eine Dichte von 5 bis 500, bevorzugt 10 bis 300 und besonders bevorzugt 15 bis 200 g/dm³, bestimmt nach DIN EN ISO 845.

Vliese sind nicht gewebte, nicht gewirkte und nicht getuftete Erzeugnisse aus Fasern, bei denen der Zusammenhalt im allgemeinen durch die den Fasern eigene Haftung gegeben ist. Sie werden auch als Nonwovens bezeichnet und können beispielsweise Faservliese, Spinnvliese oder Wirrvliese sein. Unter Vliesen sollen hier auch Vliesstoffe und Filze verstanden werden. Vorzugsweise werden Vliese mechanisch verfestigt, beispielsweise durch Vernadeln, Vermaschen oder Verwirbeln mittels scharfer Wasser- oder Luftstrahlen. Vliese können auch adhäsiv oder kohäsiv verfestigt werden. Adhäsiv verfestigte Vliese sind beispielsweise erhältlich durch Verkleben der Fasern mit flüssigen Bindemitteln oder durch Schmelzen von Bindefasern, die dem Vlies bei der Herstellung zugesetzt wurden. Kohäsiv verfestigte Vliese sind beispielsweise durch Anlösen der Fasern mit geeigneten Chemikalien und Anwendung von Druck.

Geeignete Vliese weisen als Substrat (d.h. vor der Beschichtung) je nach chemischer Zusammensetzung in der Regel ein Flächengewicht von 10 bis 2000, bevorzugt 50 bis 1000 und insbesondere 100 bis 800 g/m² auf.

Gewebe sind Erzeugnisse aus gekreuzten Fasern, vorzugsweise rechtwinklig gekreuzten Fasern. Geeignete Gewebe haben als Substrat (vor der Beschichtung) je nach chemischer Zusammensetzung in der Regel ein Flächengewicht von 10 bis 2000, bevorzugt 30 bis 1000 und insbesondere 50 bis 500 g/m².

Im Falle eines Vlieses oder Gewebes ist unter dem mittleren Porendurchmesser vorzugsweise die mittlere Größe der Poren zu verstehen, die durch die beabstandeten Fasern des Vlieses oder Gewebes gegeben sind. Die Bestimmung des mittleren Porendurchmessers der Vliese oder Gewebe erfolgt ebenfalls durch Quecksilberintrusionsmessung nach DIN 66133.

Die intrinsische Oberfläche der Substrate, z.B. des Schaums, Gewebes oder Vlieses, vor der Beschichtung beträgt in der Regel bis zu 30 m²/g, beispielsweise von 1 bis 20 m²/g, ermittelt mittels Gasadsorption nach dem BET (Brunauer, Emmet, Teller)-Verfahren gemäß DIN 66131.

Filtrierpapier umfasst nicht Aufzeichnungsmaterialien wie Schreibpapier, Zeichenpapier und Druckpapier. Geeignete Filtrierpapiere weisen je nach chemischer Zusammensetzung in der Regel ein Flächengewicht von 5 bis 200, bevorzugt 8 bis 150 und insbesondere 15 bis 100 g/m² auf.

Die Oberfläche des Substrats umfasst im Rahmen der vorliegenden Erfindung vorzugsweise neben der äußerlich sichtbaren Oberfläche des makroskopischen Körpers auch die innere Oberfläche des Materials der Wände, Stege und Fasern im Substrat, sofern die entsprechende Oberfläche des Materials durch ein Fluid zugänglich ist. Demzufolge ist der innere Bereich einer geschlossenen Pore nicht Teil der Oberfläche. Die Porenoberfläche schließt die innere Oberfläche und die äußerlich sichtbare Oberfläche des makroskopischen Körpers ein.

Chemisch betrachtet ist das Substrat ein Substrat auf Basis mindestens eines organischen Polymers A. Dabei bedeutet "auf Basis" bzw. "auf Basis von" einen Anteil von mindestens 50 Gew.-%, bevorzugt mindestens 60, besonders bevorzugt mindestens 70 und insbesondere mindestens 80 Gew.-% am Substrat.

Prinzipiell kommen für das Substrat alle organischen Polymere A in Betracht, die zu einem Schaum oder zu Fasern verarbeitet werden können. Bevorzugt ist das Polymer A des unbeschichteten Substrats ausgewählt aus Amino-Aldehyd-Harzen, Phenol-Aldehyd-Harzen, Polysytyrol, Polyvinylchlorid, Polyurethanen, Polyamiden, Polyestern, Polyolefinen, Cellulose und Fasern auf Basis von Cellulose.

### Polymere A

Die in Betracht kommenden Polymere A können synthetischer Natur sein oder in der Natur vorkommen. Sie werden nachfolgend näher beschrieben.

In einer ersten bevorzugten Ausführungsform ist das Polymer A auf Basis von Polykondensations-Reaktivharzen aufgebaut. Bekannte Polykondensations-Reaktivharze umfassen Präpolymer-Zusammensetzungen (Vorkondensate) auf Basis von aromatischen mehrfunktionellen Aminoverbindungen und einem Aldehyd, sogenannte Amino-Aldehyd-Harze (Aminoplaste), und solche auf Basis von aromatischen PolyhydroxyVerbindungen und einem Aldehyd, sogenannte Phenol-Aldehyd-Harze (Phenoplaste).

Aminoplaste und Phenoplaste werden in der Regel durch Vorkondensation einer mehrfunktionellen Aminoverbindung bzw. einer mehrfunktionellen aromatischen Hydroxylverbindung mit einem Aldehyd erhalten. Im Rahmen der Vorkondensation entsteht ein Präpolymer, welches noch reaktive funktionelle Gruppen enthält, so dass durch weitere Kondensation das Polymer A in Form eines Gels, ein vernetztes Polymernetzwerk, entstehen kann. Die Bezeichnung Reaktivharz, insbesondere ein Aminoplast bzw. ein Phenoplast, kennzeichnet somit bevorzugt eine Gelvorstufe.

Als Aldehyd eignen sich beispielsweise Formaldehyd oder Furfural. Als Aminoverbindung sind z.B. Harnstoff, Benzoguanamin, Melamin oder Anilin geeignet. Als aromatische Hydroxylverbindungen (phenolische Verbindungen) kommen z.B. die Dihydoroxybenzole (Resorcin, Catechol [Brenzcatechin], Hydrochinon), Phloroglucin oder die Kresole in Betracht. Man kann auch Mischungen der genannten Monomere einsetzen.

Bevorzugte Amino-Aldehyd-Harze sind solche aus Harnstoff, Benzoguanamin oder Melamin, und Formaldehyd. Besonders bevorzugt sind Melamin-Formaldehyd-Harze, Harnstoff-Formaldehyd-Harze und Melamin/Harnstoff-Formaldehyd-Harze. Bevorzugte Phenol-Aldehyd-Harze sind solche aus Phenol-Formaldehyd und Kresol-Formaldehyd.

Die Amino-Aldehyd- bzw. Phenol-Aldehyd-Harze können unmodifiziert, oder modifiziert, beispielsweise mit einfachen Alkoholen wie Methanol oder Ethanol, sein. Die Harze sind bevorzugt wasserlöslich und werden besonders bevorzugt als wässrige Lösungen eingesetzt, siehe weiter unten.

Die Substrate auf Basis von Amino-Aldehyd-Harzen und Phenol-Aldehyd-Harzen werden in der Regel als Schäume oder in Faserform als Gewebe oder Vliese eingesetzt. Die Herstellung solcher Fasern und der daraus erhältlichen Gewebe bzw. Vliese ist bekannt. Die Herstellung der Schäume kann unmittelbar von den Monomeren ausgehen, oder von einem aus ihnen erhältlichen Vorkondensat (Präpolymer). Die Vorkondensat-Variante ist bevorzugt und wird nachfolgend am Beispiel der besonders bevorzugten Schäume auf Basis von Melamin und Formaldehyd.

Zur Herstellung des Schaums geht man bevorzugt aus von einem Melamin-Formaldehyd-Vorkondensat. Melamin-Formaldehyd-Kondensationsprodukte können neben Melamin bis zu 50, vorzugsweise bis 20, Gew.-% anderer Duroplastbildner, und neben Formaldehyd bis zu 50, vorzugsweise bis zu 20, Gew.-% anderer Aldehyde, einkondensiert enthalten. Besonders bevorzugt ist ein unmodifiziertes Melamin-Formaldehyd-Kondensationsprodukt.

Als andere Duroplastbildner kommen beispielsweise in Frage: alkyl- und arylsubstituiertes Melamin, Harnstoff, Urethane, Carbonsäureamide, Dicyandiamid, Guanidin, Sulfurylamid, Sulfonsäureamide, aliphatische Amine, Glykole, Phenol und dessen Derivate. Als andere Aldehyde können z.B. Acetaldehyd, Trimethylolacetaldehyd, Acrolein, Benzaldehyd, Furfural, Glyoxal, Glutaraldehyd, Phthalaldehyd und Terephthalaldehyd eingesetzt werden. Weitere Einzelheiten über Melamin/Formaldehyd-Kondensationsprodukte finden sich in Houben-Weyl, Methoden der organischen Chemie, Band 14/2, 1963, Seiten 319 bis 402.

Das Molverhältnis Melamin zu Formaldehyd liegt in der Regel bei 1 : 1,3 bis 1 : 3,5, insbesondere 1 : 1,6 bis 1 : 3,1. Die Melaminharze können außerdem Sulfitgruppen einkondensiert enthalten, was beispielsweise durch Zusatz von 1 bis 20 Gew.-% Natriumhydrogensulfit bei der Kondensation des Harzes geschehen kann, sieheEP-A 37470.

Das Melamin-Formaldehyd-Vorkondensat liegt üblicherweise als Lösung oder Dispersion vor, und wird mit den üblichen, zur Herstellung eines Schaums erforderlichen Zusatzstoffen vermischt. Solche Zusatzstoffe sind insbesondere Emulgatoren zur Emulgierung des Treibmittels und zur Stabilisierung des Schaumes, beispielsweise anionische, kationische oder nichtionische Tenside, z.B. Alkylsulfate, und Treibmittel (chemische oder physikalische, z.B. Pentan), um aus der Melamin-Formaldehyd-Harzlösung einen Schaum zu erzeugen. Außerdem werden Härter (auch als Katalysatoren bezeichnet) mitverwendet; dies sind meist Säuren, z.B. Ameisensäure oder Essigsäure, die eine Weiterkondensation des Harzes zum ausgehärteten Schaum katalysieren. Die Zusatzstoffe werden beispielsweise in einem Extruder mit der wässrigen Lösung oder Dispersion des Melamin-Formaldehyd-Harzes homogen vermischt, wobei das Treibmittel ggf. auch unter Druck eingepresst werden kann. Man kann jedoch auch von einem festen, z.B. sprühgetrockneten Harz ausgehen und dieses dann mit einer wässrigen Lösung des Emulgators, dem Härter sowie dem Treibmittel vermischen. Nach dem Vermischen wird die Lösung oder Dispersion durch eine Düse ausgetragen und unmittelbar anschließend erhitzt, z.B. durch Hochfrequenzbestrahlung bei 2,45 GHz oder durch Mikrowellenbestrahlung, und dabei verschäumt. Die infolge Temperaturerhöhung und Verdampfen des Treibmittels aufschäumende Mischung wird beispielsweise zu einem Schaumstoffstrang geformt, der zu Blöcken zerschnitten wird.

Besonders bevorzugt sind Amino-Aldehyd-Schäume bzw. Phenol-Aldehyd-Schäume mit einer Rohdichte von 8 bis 120, insbesondere 12 bis 50 g/dm³, bestimmt nach DIN EN ISO 845.

Weitere Angaben zu Einsatzstoffen, beispielsweise Emulgatoren, Treibmittel und Härter, und weiteren Verfahrensdetails der Melamin-Formaldehyd-Schaum-Herstellung enthalten beispielsweise die Schriften WO 01/94436, EP-A 17 671, 17 672 und 37 470.

Geeignete Amino-Aldehyd-Harze bzw. Phenol-Aldehyd-Harze als solche bzw. als Lösung oder Dispersion sind z.B. als Kaurit®, Kauramin® oder Luwipal® von BASF erhältlich. Auch offenzellige Schäume sind im Handel erhältlich, beispielsweise der Melamin-Formaldehyd-Schaum Basotect® von BASF.

Sofern die aus den nachfolgend genannten Polymeren hergestellte Schäume ganz oder überwiegend geschlossenzellig sind, erzielt man die erforderliche Offenzelligkeit des Schaums durch mechanische Behandlung des Schaums (z.B. Öffnen der Zellen mit Nadeln, Schneidwerkzeugen, scharfen Druckluft- oder Wasserstrahlen), oder durch Mitverwendung geeigneter Treibmittel und Nukleierungsmittel, die bereits beim Verschäumen die Schaumzellen öffnen, oder mittels geeigneter Verschäumbedingungen.

In einer weiteren bevorzugten Ausführungsform ist das Substrat auf Basis von Polystyrol aufgebaut. Polystyrol wird hier als Sammelbegriff verwendet und umfasst Homo- und Copolymere vinylaromatischer Monomere. Geeignete Monomere sind Styrol, α-Methylstyrol, p-Methylstyrol, Ethylstyrol, tert.-Butylstyrol, Vinylstyrol, Vinyltoluol, 1,2-Diphenylethylen, 1,1-Diphenylethylen oder deren Mischungen. Bevorzugtes Monomer ist Styrol.

Polystyrol wird in der Regel als Schaum eingesetzt. Die Herstellung von Polystyrolschäumen als Partikelschäume oder Extrusionsschäume ist bekannt. Bei Partikelschäumen stellt man zunächst treibmittelhaltiges, expandierbares Polystyrol (EPS) her, was nach dem Suspensionsverfahren (Polymerisation in Gegenwart von Treibmitteln), dem Imprägnierverfahren (Imprägnieren von treibmittelfreien Polystyrolpartikeln mit dem Treibmittel unter Druck in einer erhitzten Suspension, wobei das Treibmittel in die erweichten Partikel diffundiert, und Abkühlen der Suspension unter Druck) oder dem Extrusionsverfahren (Einmischen des Treibmittels in eine Polystyrolschmelze mittels eines Extruders, Austrag der treibmittelhaltigen Schmelze unter Druck, danach Unterwasserdruckgranulierung) erfolgen kann. Die EPS-Partikel werden anschließend durch Vor- und Ausschäumen zum Polystyrolschaum verschäumt.

Extrusionsschäume aus Polystyrol (XPS) werden durch Einmischen des Treibmittels in eine Polystyrolschmelze mittels eines Extruders hergestellt, wobei die treibmittelhaltige Schmelze unmittelbar in die Umgebung austritt und nicht unter Druck ausgetragen wird. Beim Austritt aus der Extruderdüse schäumt die Schmelze unter Verfestigung auf.

In einer weiteren bevorzugten Ausführungsform ist das Substrat auf Basis von Polyvinylchlorid aufgebaut. Als Polyvinylchlorid (PVC) eignen sich beispielsweise die Homopolymere Hart-PVC, erhältlich durch Emulsions-, Suspensions- oder MassePolymerisation von Vinylchlorid, sowie Weichmacher enthaltendes Weich-PVC, und PVC-Pasten. Als Vinylchlorid-Copolymere sind solche mit Vinylacetat (VCVAC), mit Ethylen (VCE), mit Vinylidenchlorid (VCVDC), mit Methylacrylat (VCMA) oder Octylacrylat, mit Methylmethacrylat (VCMMA), mit Maleinsäure oder Maleinsäureanhydrid (VCMAH),mit Maleinimid (VCMAI) oder mit Acrylnitril geeignet. Auch chloriertes PVC (C-PVC) ist geeignet. Polyvinylchlorid umfasst auch Polyvinylidenchloride (PVDC), also Copolymere aus Vinylidenchlorid und Vinylchlorid.

Polyvinylchlorid wird bevorzugt als Schaum oder faserförmig als Gewebe oder Vlies verwendet.

In einer weiteren bevorzugten Ausführungsform ist das Substrat auf Basis von Polyadditionsprodukten von Isocyanaten aufgebaut. Eine bevorzugte Ausführungsform der Polyadditionsprodukte auf Basis von Isocyanat sind Polyurethane. Geeignete Polyurethane können auch andere Verknüpfungen, insbesondere Isocyanurat- und/oder Harnstoffverknüpfungen, enthalten. Als Polymer A des Substrats kommen weiche, halbharte oder harte sowie thermoplastische oder vernetzte Polyurethan-Typen in Betracht.

Die Herstellung der Polyurethane ist vielfältig beschrieben und erfolgt üblicherweise durch Umsetzung von Isocyanaten I) mit gegenüber Isocyanaten reaktiven Verbindungen II) bei allgemein bekannten Bedingungen. Bevorzugt wird die Umsetzung in Gegenwart von Katalysatoren III) und üblicherweise in Gegenwart von Hilfsstoffen IV) durchgeführt. Wenn es sich um geschäumte Polyurethane handelt - dies ist bevorzugt - , so werden diese in Gegenwart von üblichen Treibmitteln V) oder nach bekannten Methoden zur Herstellung von Polyurethanschäumen hergestellt.

Als Isocyanate kommen beispielsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylendiisocyanat (PPDI), Tri-, Tetra-, Penta-, Hexa-, Hepta- und/oder Octamethy-lendiisocyanat, 2-Methylpentamethylen-1 ,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und/oder 4,4'-, 2,4'- und/oder 2,2'-Dicyclohexylmethandiisocyanat in Betracht.

Vorzugsweise eingesetzt werden aromatische Diisocyanate, insbesondere 2,4-und/oder 2,6-Toluylendiisocyanat (TDI), 2,2'-, 2,4'- und/oder 4,4'-Diphenylmethandiisocyanat (MDI), 1,5-Naphthylendiisocyanat (NDI) und Paraphenylendiisocyanat (PPDI). Besonders bevorzugt werden Isocyanate auf Basis von TDI oder auf Basis von MDI eingesetzt. Ebenso in Betracht kommen oligomere, mehrkernige aromatische Isocyanate auf Basis von MDI.

Als gegenüber Isocyanaten reaktive Verbindungen II) können beispielsweise allgemein bekannte Verbindungen mit einem Molekulargewicht von 60 bis 10000 und einer Funktionalität gegenüber Isocyanaten von 1 bis 8, bevorzugt 2 bis 6 eingesetzt werden. Geeignete Verbindungen II) sind beispielsweise Polyole, insbesondere solche mit einem Molekulargewicht von 500 bis 10000, z.B. Polyetherpolyole, Polyesterpolyole, Polyetherpolyesterpolyole, und/oder Diole, Triole und/oder Polyole mit Molekulargewichten kleiner 500.

Als Katalysatoren III) zur Herstellung der Polyurethane können gegebenenfalls allgemein bekannte Verbindungen eingesetzt werden, welche die Reaktion von Isocyanaten mit den gegenüber Isocyanaten reaktiven Verbindungen beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen II), verwendet wird, beispielsweise tertiäre Amine und/oder Metallsalze, beispielsweise anorganische und/oder organische Verbindungen des Eisens, Bleis, Zinks, und/oder Zinns in üblichen Oxidationsstufen des Metalls.

Als Hilfsstoffe IV) können gegebenenfalls übliche Substanzen verwendet werden. Genannt seien beispielsweise oberflächenaktive Substanzen, Füllstoffe, Farbstoffe, Pigmente, Flammschutzmittel, Hydrolyseschutzmittel, fungistatisch und bakteriostatisch wirkende Substanzen sowie UV-Stabilisatoren und Antioxidantien.

Einzelheiten zu Polyurethanen, Polyisocyanuraten und Polyharnstoffen findet der Fachmann im Kunststoff-Handbuch, 3. Auflage, Band 7 "Polyurethane", Hanser Verlag, München 1993.

Polyurethane werden bevorzugt als Schaum eingesetzt.

In einer weiteren bevorzugten Ausführungsform ist das Substrat auf Basis von Polyamiden aufgebaut. Als Polyamide (PA) eignen sich solche mit aliphatischem teilkristallinem oder teilaromatischem sowie amorphem Aufbau jeglicher Art und deren Blends, einschließlich Polyetheramiden wie Polyetherblockamiden. Unter Polyamiden im Sinne der vorliegenden Erfindung sollen alle bekannten Polyamide verstanden werden. Solche Polyamide weisen im allgemeinen eine Viskositätszahl von 90 bis 350, vorzugsweise 110 bis 240 ml/g auf bestimmt in einer 0,5 gew.-%-igen Lösung in 96 gew.-%-iger Schwefelsäure bei 25°C gemäß ISO 307.

Geeignete Polyamide sind beispielsweise (in Klammern sind die Monomeren angegeben):
- PA 46: (Tetramethylendiamin, Adipinsäure)
- PA 66: (Hexamethylendiamin, Adipinsäure)
- PA 69: (Hexamethylendiamin, Azelainsäure)
- PA 610: (Hexamethylendiamin, Sebacinsäure)
- PA 612: (Hexamethylendiamin, Decandicarbonsäure)
- PA 613: (Hexamethylendiamin, Undecandicarbonsäure)
- PA 1212: (1,12-Dodecandiamin, Decandicarbonsäure)
- PA 1213: (1,12-Dodecandiamin, Undecandicarbonsäure)
- PA 1313: (1,13-Diaminotridecan, Undecandicarbonsäure)
- PA MXD6: (m-Xylylendiamin, Adipinsäure)
- PA TMDT: (Trimethylhexamethylendiamin, Terephthalsäure)
- PA 4: (Pyrrolidon)
- PA 6: (ε-Caprolactam)
- PA 7: (Ethanolactam)
- PA 8: (Capryllactam)
- PA 9: (9-Aminopelargonsäure)
- PA 11: (11-Aminoundecansäure)
- PA 12: (Laurinlactam)
- PA 6T: (Hexamethylendiamin, Terephthalsäure)
- PA 61: (Hexamethylendiamnin, Isophthalsäure)
- PA 6/6TPA: (Caprolactam/Hexamethylendiamin, Terephthalsäure)
- PA 6-3-T: (Trimethylhexamethylendiamin, Terephthalsäure)

Bevorzugt sind PA 6 und PA 66. Die genannten Polyamide und ihre Herstellung sind bekannt. Entsprechende Polyamide sind z.B. unter dem Handetsnamen Ultramid® von BASF erhältlich.

Polyamide setzt man bevorzugt faserförmig ein, d.h. als Gewebe oder Vlies.

In einer weiteren bevorzugten Ausführungsform ist das Substrat auf Basis von Polyester aufgebaut. Geeignete Polyester enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. tert.-Butylgruppen. Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Bevorzugte Dicarbonsäuren sind Naphthalindicarbonsäure, Terephthalsäure und Isophthalsäure oder deren Mischungen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden. Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Besonders bevorzugte Polyester sind Polyalkylenterephthalate, die sich von Alkandiolen mit 2 bis 6 C-Atomen ableiten. Von diesen werden insbesondere Polyethylenterephthalat (PET), Polyethylennaphthalat (PEN) und Polybutylenterephthalat (PBT) bevorzugt. Auch Polytetrahydrofuran (PolyTHF) ist ein geeigneter Polyester.

Polyester werden bevorzugt in Form von Fasern verwendet, d.h. als Gewebe oder Vlies.

In einer weiteren bevorzugten Ausführungsform ist das Substrat auf Basis von Polyolefinen aufgebaut. Als Polyolefine eignen sich beispielsweise Homo- und Copolymere enthaltend Ethylen, Propylen, But-1-en, Isobutylen, 4-Methylpenten und/oder Hex-1-en. Bevorzugt sind Polyethylen (PE) und Polypropylen (PP). Auch Polybutene wie Polybut-1-en und Polyisobutylen (PIB) können verwendet werden.

Geeignete Polyethylene sind beispielsweise PE-ULD (ULD ultra low density), PE-LD (LD low density, PE-LLD (LLD linear low density), PE-HD (HD high density), PE-HMW (auch als PE-HD-HMW bezeichnet, HMW high molecular weight) und PE-UHMW (auch als PE-HD-UHMW bezeichnet, UHMW ultra high molecular weight). Auch vernetzte Polyethylene (PE-X), chlorierte und chlorsulfonierte Polyethylene (PE-C) sind geeignet, ebenso Ethylen-Vinylacetat-Copolymere (EVA), Ethylen-Vinylalkohol-Copolymere (EVAL) und Copolymere von Ethylen mit Ethylacrylat (EEA), Butylacrylat (EBA), Methacrylat (EMA), Acrylsäure (EAA) oder mit Methycrylsäure (EMAA). Weiterhin kann man auch Ethylen-Norbornen-Copolymere verwenden, die auch als Cycloolefin-Copolymere (COC) bezeichnet werden. Derartige Polyethylene und ihre Herstellung sind bekannt.

Als Polypropylene sind z.B. Homopolypropylen, oder Copolymere des Propylens mit Comonomeren, insbesondere C₂₋₈-Alkenen wie Ethylen, But-1-en, Pent-1 en oder Hex-1 en, geeignet. Die Copolymere können statistische Copolymere, Blockcopolymere oder Impact-Copolymere sein, und der Comonomeranteil beträgt in der Regel bis zu 50 Gew.-%. Die statistischen Copolymere enthalten üblicherweise bis zu 15, bevorzugt bis zu 6 Gew.-% andere Alk-1-ene wie Ethylen, But-1 en oder deren Mischungen.

Bei den ebenfalls geeigneten Block- oder Impact-Copolymeren des Propylens stellt man in einer ersten Stufe ein Propylenhomopolymer oder ein Copolymer des Propylens mit bis zu 15, bevorzugt bis zu 6 Gew.-% der genannten Alk-1-ene her und polymerisiert in einer zweiten Stufe ein Propylen-Ethylen-Copolymer mit einem Ethylengehalt von 15 bis 80 Gew.-%, wobei das Propylen-Ethylen-Copolymer zusätzlich weitere C₄₋₈-Alkene enthalten kann. Üblicherweise beträgt der Anteil der zweiten Stufe am Block- bzw. Impact-Copolymer 3 bis 60 Gew.-%. Wie die Polyethylene können auch die Polypropylene chloriert sein (PP-C). Auch Ethylen-Propylen-Copolymere (EPM) bzw. Ethylen-Propylen-Dien-Copolymere (EPDM) sind geeignet.

Die genannten Polyolefine sind bekannt. Sie können z.B. mittels Ziegler-Natta- oder Metallocen-Katalysatorsystemen hergestellt werden und sind handelsüblich. Polyolefine können als Schaum oder faserförmig als Gewebe bzw. Vlies eingesetzt werden. Die Herstellung der Polyolefinschäume erfolgt beispielsweise wie weiter oben bei den Polystyrol-Schäumverfahren beschrieben.
In einer weiteren bevorzugten Ausführungsform ist das Substrat auf Basis von Cellulose aufgebaut. Cellulose wird bevorzugt faserförmig verwendet, insbesondere als Gewebe oder Vlies. Geeignete Fasern auf Basis von Cellulose sind Baumwolle, Zellstoff, Kapok, Leinen, Ramie, Jute, Hanf, Kokosfasern, Sisal und alle anderen cellulosehaltigen Naturfasern, sowie Fasern auf Basis von regenerierter Cellulose oder Celluloseestern wie Kunstseide, Kupferseide, Zellglas, Viskose, Celluloseacetat oder Acetatseide. Zellstoff ist besonders bevorzugt.

Die Herstellung derartiger Gewebe und Vliese auf Cellulosebasis ist bekannt.

In einer bevorzugten Ausführungsform ist das unbeschichtete Substrat ausgewählt aus Schäumen auf Basis von Amino-Aldehyd-Harzen, Phenol-Aldehyd-Harzen und Polyurethanen.

In einer ebenfalls bevorzugten Ausführungsform ist das unbeschichtete Substrat ausgewählt aus Geweben oder Vliesen auf Basis von Polyestern oder Cellulose.

### Beschichtung mit Polymer B

Erfindungsgemäß ist die Oberfläche des makroporösen Substrats mit einem Polymer B auf Basis von Reaktivharzen beschichtet, und diese Beschichtung ist nanoporös, wobei der mittlere Durchmesser der Nanoporen maximal 1000 nm beträgt, bestimmt mittels Quecksilberintrusionsmessung nach DIN 66133.

Der Begriff "auf Basis von" umfasst sowohl die jeweilige Verbindung oder die jeweiligen Verbindungen in umgesetzter oder in nicht umgesetzter Form, das heißt, der Begriff kann sich sowohl auf eine Gelvorstufe als auch auf ein vernetztes Polymer beziehen. Dabei bedeutet "auf Basis von" in der Regel einen Anteil von mindestens 50 Gew.-%, bevorzugt mindestens 60, besonders bevorzugt mindestens 70 und insbesondere mindestens 80 Gew.-% Reaktivharz am ausgehärteten Polymer B.

Die Reaktivharze sind aufgebaut aus niedermolekularen organischen Verbindungen oder aus Vorkondensaten, die eine Vernetzungsreaktion eingehen können, beispielsweise durch Additions- oder Kondensationsreaktionen. Der Begriff Reaktivharz umfasst im Rahmen dieser Erfindung bevorzugt sowohl monomere Ausgangsstoffe als auch Präpolymere, das heißt Monomere, die bereits vorab umgesetzt wurden. Die Reaktivharze sind bevorzugt Gelvorstufen. Eine Gelvorstufe ist eine Zusammensetzung aus mindestens einer monomeren und/oder präpolymerisierten Verbindung, welche gelierbar ist und welche durch eine Vernetzungsreaktion in Gegenwart eines Lösungsmittels zu einem Gel umgesetzt werden kann.

Die Herstellung von nanoporösen Polymeren ausgehend von Reaktivharzen, bevorzugt Gelvorstufen, ist weitläufig bekannt. Üblicherweise erfolgt die Herstellung dabei nach dem Sol-Gel-Verfahren, wobei zuerst eine reaktive Vorstufe bereitgestellt wird, die anschließend zu einem Gel umgesetzt wird. Anschließend wird das Lösungsmittel entfernt, üblicherweise nachdem es gegen ein alternatives Lösungsmittel ausgetauscht wurde. Prinzipiell kommen als Vorstufe von Polymer B alle bekannten Gelvorstufen in Betracht, die sich nach oben dargelegtem Verfahren zu einem Gel umsetzen lassen.

Bevorzugt ist das Reaktivharz ausgewählt aus Amino-Aldehyd-Harzen (Aminoplaste), Phenol-Aldehyd-Harzen (Phenoplaste) und Gelvorstufen auf Basis von Isocyanaten. Davon sind die Amino-Aldehyd-Harze und die Gelvorstufen auf Basis von Isocyanaten besonders bevorzugt. Von den Amino-Aldehyd-Harzen sind Harnstoff-Formaldehyd-Harze und Melamin-Formaldehyd-Harze besonders bevorzugt.

Besonders bevorzugt ist das Reaktivharz ausgewählt aus Melamin-Formaldehyd-Harzen, Harnstoff-Formaldehyd-Harzen, Melamin/Harnstoff-Formaldehyd-Harzen und Gelvorstufen auf Basis von Isocyanaten und Phenolen. Von den Gelvorstufen auf Basis von Isocyanaten und Phenolen sind Gelvorstufen auf Basis von mehrfunktionellen aromatischen Isocyanaten und Phenolen mit mindestens zwei Hydroxylgruppen pro Molekül ganz besonders bevorzugt.

Als Vorstufe von Polymer B geeignete Amino-Aldehyd-Harze und Phenol-Aldehyd-Harze wurden weiter oben beim nanoporösen Substrat (Polymere A) bereits beschrieben. Auch die dort bei der beispielhaft beschriebenen Herstellung von Melamin-Formaldehyd-Schäumen genannten Duroplastbildner bzw. sonstigen Aldehyde können mitverwendet werden.

Die Amino-Aldehyd-Harze und Phenol-Aldehyd-Harze sind vorzugsweise wasserlöslich. Die Harze können unmodifiziert oder mit Alkoholen modifiziert und somit hydrophobisiert sein.

Als Vorstufe von Polymer B Ganz besonders bevorzugte Reaktivharze sind Melamin-Formaldehyd-Harze, vorzugsweise solche mit einem Molverhältnis Melamin zu Formaldehyd von 1 : 1,2 bis 1 : 3,5, bevorzugt 1 : 1,4 bis 1 : 2, insbesondere 1 : 1,4 bis 1: 1,6.

Geeignete Amino-Aldehyd-Harze bzw. Phenol-Aldehyd-Harze als solche bzw. als Lösung oder Dispersion sind z.B. als Kaurit®, Kauramin® oder Luwipal® von BASF erhältlich.

Geeignete Reaktivharze auf Basis von Isocyanaten sind solche umfassend folgende Komponenten: (I) mindestens ein Isocyanat mit einer Funktionalität von mindestens 2 und **(II)** mindestens eine gegenüber Isocyanaten reaktive Verbindung mit einer Funktionalität von mindestens 2. Bevorzugt wird die Umsetzung der Komponenten **(I)** und **(II)** in Gegenwart von Katalysatoren (III) durchgeführt.

Unter Funktionalität einer Verbindung soll im Rahmen der vorliegenden Erfindung die Zahl der reaktiven Gruppen pro Molekül verstanden werden. Dabei spiegelt die Funktionalität die Anzahl an Isocyanatgruppen beziehungsweise die Anzahl von gegenüber Isocyanaten reaktiven Gruppen pro Molekül wider.

Ausgehend von Reaktivharzen auf Basis von Isocyanaten können Polyadditionsprodukte als Polymer B in Form einer nanoporösen Beschichtung wie weiter unten beschrieben hergestellt werden. Üblicherweise erfolgt diese Herstellung durch ein Sol-Gel-Verfahren in Gegenwart eines Lösungs- oder Dispersionsmittels, welches nach Vernetzung (Gelierung) des Reaktivharzes entfernt wird. Das Polymer B auf Basis von Polyadditionsprodukten von Isocyanaten kann Isocyanurat-, Harnstoff- oder Urethanverknüpfungen oder zwei oder drei dieser Verknüpfungen enthalten.

Geeignete Isocyanate sind beispielsweise die unter Polymer A beschriebenen aliphatischen, cycloaliphatischen und aromatischen Diisocyanate. Als Isocyanat vorzugsweise eingesetzt werden aromatische Diisocyanate, insbesondere 2,4- und/oder 2,6-Toluylendiisocyanat (TDI), 2,2'-, 2,4'- und/oder 4,4'-Diphenylmethandiisocyanat (MDI), 1,5-Naphthylendiisocyanat (NDI) und Paraphenylendiisocyanat (PPDI). Besonders bevorzugt kommen Isocyanate auf Basis von TDI oder auf Basis von MDI zum Einsatz.

Als Isocyanate sind insbesondere sogenannte oligomere Isocyanate geeignet. Dabei handelt es sich um oligomere oder polymere Kondensationsprodukte und somit Derivate aromatischer monomerer Diisocyanate. Bevorzugt handelt es sich dabei um oligomere aromatische Isocyanate auf Basis von MDI. Die Isocyanate können auch als Mischung von monomeren und oligomeren Isocyanaten eingesetzt werden.

Bei einem Oligomer des MDI handelt es sich um ein mehrkerniges Kondensationsprodukt des MDI mit einer Funktionalität von mehr als 2, beispielsweise 3, 4 oder 5. Oligomeres MDI ist bekannt und enthält üblicherweise eine Mischung aus MDI-basierten Isocyanaten mit unterschiedlicher Funktionalität. Üblicherweise enthält das so eingesetzte oligomere MDI auch noch einen signifikanten Anteil an monomerem MDI. Die (mittlere) Funktionalität des gemischten oligomeren MDI kann im Bereich von ungefähr 2,5 bis ungefähr 5 variieren, beispielsweise von 2,7 bis 3,5. Eine solche Mischung von MDI-basierten Isocyanaten mit unterschiedlichen Funktionalitäten ist beispielsweise das Roh-MDI, das bei der Herstellung von MDI anfällt.

Die beschriebenen Isocyanate oder Mischungen mehrerer Isocyanate auf Basis von MDI sind bekannt und werden beispielsweise von Elastogran GmbH unter dem Namen Lupranat® vertrieben.

In Betracht kommende, gegenüber Isocyanaten reaktive Verbindungen sind dem Fachmann im Zusammenhang mit nanoporösen Polymerschäumen, die durch ein Sol-Gel-Verfahren hergestellt wurden, grundsätzlich bekannt.

Als gegenüber Isocyanaten reaktive Verbindungen kommen zur Herstellung der nanoporösen Beschichtung insbesondere folgende Verbindungen einzeln oder in Mischungen in Betracht:
- Polyoxyalkylenamine oder Amin-basierte Polyole oder Mischungen daraus wie in der US-A 2006/0211840 in Absatz [0009] und [0014] oder höherfunktionale, gegenüber Isocyanat reaktive alkoxylierte Verbindungen wie in der WO 95/03358 auf Seite 8, vierter bis letzter Absatz beschrieben;
- Polyesterole, Polyetherole und/oder Polycarbonatdiole, die üblicherweise auch unter dem Begriff "Polyole" zusammengefaßt werden, mit Molekulargewichten von 500 bis 12000 g/mol, bevorzugt 600 bis 6000, insbesondere 800 bis 4000, und einer mittleren Funktionalität von ungefähr 2 bis ungefähr 5;
- Polyetherpolyalkohole, Polyesterpolyalkohole, Polyetherpolyesteralkohole, Polythioetherpolyole, hydroxylgruppenhaltigen Polyacetale und hydroxylgruppenhaltigen aliphatischen Polycarbonate oder Mischungen aus mindestens zwei der genannten Polyole;
- Hyperverzweigte Verbindungen, beispielsweise stark verzweigte Estergruppen enthaltende Polyole, beispielsweise die aus 2,2-Dimethylolpropionsäure erhältliche Kondensationsprodukte, die Perstorp AB unter den Marken Boltorn® vertreibt, wie in der WO 2006/128872 beschrieben;
- Phenolische Verbindungen mit mindestens 2 Hydroxygruppen, beispielsweise Derivate des Benzendiols wie Catechol (1,2-Dihydroxybenzol), Resorcin (1,3-Dihydroxybenzol), Hydrochinon (1,4-Dihydroxybenzol), oder Orcin (3,5-Dihydroxytoluol). Weiterhin sind phenolische Verbindungen mit mindestens 2 Benzolringen, insbesondere Derivate des Bisphenyls, beispielsweise 4,4'-Biphenol, oder Bisphenol-A geeignet. Darüber hinaus kommen phenolische Verbindungen mit einer OH-Funktionalität von drei in Betracht, beispielsweise Pyrogallol und insbesondere Phloroglucin. Als phenolische Verbindung besonders geeignet sind phenolische Verbindungen mit einer OH-Funktionalität von drei, insbesondere Phloroglucin.

Ausgehend von den genannten Amino-Aldehyd-Harzen, Phenol-Aldehyd-Harzen und Gelvorstufen auf Basis von Isocyanaten unterscheidet sich das Verfahren zur Herstellung der nanoporösen Beschichtung jedoch vom Verfahren zur Herstellung des Substrats, wie weiter unten weiter ausgeführt wird. Während das Substrat ausgehend von den genannten Reaktivharzen üblicherweise durch Einsatz von Treibmitteln hergestellt wird, erfolgt die Herstellung der nanoporösen Beschichtung ausgehend von den beschriebenen Reaktivharzen üblicherweise durch ein Sol-Gel-Verfahren.

Je nach beabsichtigter Verwendung des erfindungsgemäßen porösen Materials und dem gewünschten Eigenschaftsprofil können die Polymere A des unbeschichteten makroporösen Substrats und die Polymere B der nanoporösen Beschichtung von gleicher chemischer Natur (Beispiel: Melamin-Formaldehyd-Beschichtung auf Melamin-Formaldehyd-Schaum) oder von verschiedenartiger chemischer Natur sein sein (Beispiel: Melamin-Formaldehyd-Beschichtung auf Cellulosevlies oder auf Polyestergewebe).

Erfindungsgegenstand ist auch ein Verfahren zur Herstellung des erfindungsgemäßen porösen Materials, dadurch gekennzeichnet, dass das Reaktivharz mit dem makroporösen unbeschichteten Substrat in Kontakt gebracht und danach in dessen Gegenwart zum Polymer B ausgehärtet wird.

In einer bevorzugten Ausführungsform umfasst dieses Verfahren folgende Schritte:
a) das Reaktivharz als Vorstufe von Polymer B wird als Lösung bzw. Dispersion in einer Flüssigkeit bereitgestellt
b) zu der in Schritt a) erhaltenen Lösung bzw. Dispersion wird ein Katalysator gegeben
c) das makroporöse unbeschichtete Substrat wird mit der in Schritt b) erhaltenen Mischung in Kontakt gebracht
d) die in Schritt c) mit dem Substrat in Kontakt gebrachte Mischung wird in Gegenwart des Substrats ausgehärtet
e) die in der Mischung enthaltene Flüssigkeit wird entfernt.

Das Verfahren wird bevorzugt in der Reihenfolge a-b-c-d-e durchgeführt. Falls die Aushärtung schnell erfolgt, ist alternativ auch die Reihenfolge a-c-b-d-e möglich. In einer weiteren Ausführungsform ist die Zugabe des Katalysators optional und das Verfahren wird gemäß der Reihenfolge a-b (optional)-c-d-e oder a-c-b (optional)-d-e durchgeführt.

In Schritt a) wird das Reaktivharz als Gelvorstufe von Polymer B als Lösung bzw. Dispersion in einer Flüssigkeit bereitgestellt.

Das in Schritt a) eingesetzte Reaktivharz ist im Falle der Amino-Aldehyd-Harze und der Phenol-Aldehyd-Harze bevorzugt ein Vorkondensat (Präpolymer). Man kann beispielsweise eine Lösung bzw. Dispersion verwenden, wie sie bei der Herstellung des Vorkondensats unmittelbar anfällt, oder eine solche Lösung bzw. Dispersion mit der Flüssigkeit verdünnen, bis der gewünschte Gehalt der Lösung bzw. Dispersion vorliegt. Ebenso kann man von einem festen, z.B. sprühgetrockneten Reaktivharz ausgehen und dieses mit der Flüssigkeit vermischen, sodass die Lösung bzw. Dispersion erhalten wird.

Falls in Schritt a) als Reaktivharz eine Gelvorstufe auf Basis von Isocyanaten eingesetzt wird, stellt man bevorzugt die beiden Komponenten Isocyanat I) und mit Isocyanat reaktive Verbindungen II) getrennt voneinander als Lösung bzw. Dispersion bereit. Wie weiter unten bei Schritt b) beschrieben, wird bei den Polyurethanen der Katalysator bevorzugt einer der Komponenten zugefügt und erst dann die andere Komponente zugefügt.

Die in Schritt a) vorzugsweise als Lösungs- oder Dispersionsmittel eingesetzten Flüssigkeiten sind im Falle der Amino-Aldehyd-Harze und Phenol-Aldehyd-Harze als Gelvorstufe von Polymer B Wasser, bzw., falls Gelvorstufen auf Basis von Polyisocyanaten oder hydrophobe Reaktivharze eingesetzt werden, organische Lösungsmittel, beispielsweise solche, die üblicherweise bei der Herstellung von Polyurethanen zum Einsatz kommen. Bevorzugt geht man von einer wässrigen Amino-Aldehyd- bzw. Phenol-Aldehyd-Harz-Lösung bzw. -Dispersion aus.

Die Schichtdicke, Dichte und mechanische Stabilität der Beschichtung mit Polymer B lässt sich unter anderem über die Konzentration des Reaktivharzes im Lösungs- oder Dispersionsmittel steuern. Die Konzentration des Reaktivharzes im Lösungsmittel oder in der Dispersion darf nicht zu gering gewählt werden, da ansonsten bei der Aushärtung (Gelierung) entweder gar keine, keine mechanisch stabile, oder eine für die Anforderungen nicht ausreichend stabile Beschichtung erhalten wird. Bevorzugt setzt man Lösungen bzw. Dispersionen ein, deren Gehalt an Reaktivharz mindestens 0,5 und insbesondere mindestens 1 Gew.-% beträgt.

Bei mechanisch stark beanspruchten erfindungsgemäßen porösen Materialien mit hoher Filterleistung, beispielsweise bei hoher Strömungsgeschwindigkeit und/oder hohem Feststoffgehalt des zu filtrierenden Mediums, oder falls abrasive Feststoffe abgetrennt werden sollen oder falls eine besonders hohe Standzeit des Filters gewünscht ist, kann eine besonders haltbare nanoporöse Beschichtung mit einer höherer mechanischen Stabilität vorteilhaft sein. Diese erhält man mit höheren Reaktivharz-Gehalten von beispielsweise mindestens 5 Gew.-%, bezogen auf die Reaktivharz-Lösung bzw. - Dispersion, wodurch eine mechanisch ausreichend stabile Beschichtung entsteht.

Der maximale Gehalt der Reaktivharz-Lösung bzw. -Dispersion richtet sich einerseits nach der Viskosität der Lösung bzw. Dispersion. Die Lösung bzw. Dispersion sollte so dünnflüssig (niedrigviskos) sein, dass sie während des Inkontaktbringens mit dem unbeschichteten Substrat alle gewünschten Oberflächen des Substrats erreicht. So ist beispielsweise bei Schaumkörpern als Substrat bevorzugt, dass auch zumindest Teile des Inneren des Schaumes eine nanoporöse Beschichtung aufweisen, wozu die Reaktivharz-Lösung bzw. -Dispersion in das Innere des Schaumkörpers eindringen muss.

Aus der Tatsache, dass eine Beschichtung des Substrats erreicht werden soll, wobei vorzugsweise die mittlere Schichtdicke der Beschichtung kleiner ist als der mittlere Porendurchmesser des Substrats, ergibt sich andererseits eine obere Grenze für den Gehalt des Reaktivharzes im Lösung bzw. -Dispersionsmittel. Dies bedeutet, dass die Konzentration der Reaktivharzlösung vorzugsweise geringer gewählt wird, als eine Konzentration, die zu einer vollständigen oder nahezu vollständigen Ausfüllung der Poren des Substrats führt.

Vorzugsweise beträgt die Konzentration des Reaktivharzes im Lösungsmittel nicht mehr als 10 Gew.-%, beispielsweise von 0,5 bis 10 Gew.-%. Besonders bevorzugt ist eine Konzentration des Reaktivharzes im Lösungsmittel von 1 bis 8 Gew.-%, insbesondere von 2 bis 7 Gew.-%.

Temperatur und Druck bei Schritt a) sind üblicherweise nicht kritisch und betragen beispielsweise 0 bis 150, bevorzugt 10 bis 100°C bzw. 0,8 bis 50, bevorzugt 1 bis 20 bar.

In Schritt b) wird zu der in Schritt a) erhaltenen Lösung bzw. Dispersion ein Katalysator gegeben. Als Katalysator für die Amino-Aldehyd-Harze oder die Phenol-Aldehyd-Harze eignen sich organische Säuren, beispielsweise Carbonsäuren mit 1 bis 6 C-Atomen. Bevorzugt sind Ameisensäure und Essigsäure. Ebenfalls bevorzugt sind anorganische Säuren, insbesondere Mineralsäuren wie Schwefelsäure, Salpetersäure, Phosphorsäure oder Halogenwasserstoffsäuren, z.B. Salzsäure.

Als Katalysator für Polyurethane kommen beispielsweise die weiter oben bei der Beschreibung der Polyurethane als Komponente III) genannten üblichen Katalysatoren in Betracht, z.B. tertiäre Amine oder Metallsalze. Es hat sich als vorteilhaft erwiesen, bei Polyurethanen als Polymer B die Komponenten Isocyanat I) und gegenüber Isocyanaten reaktive Verbindungen II) (Polyole etc.) getrennt voneinander bereitzustellen, den Katalysator III) einer der beiden Komponenten I) und II) zuzufügen, zu durchmischen und erst dann die andere Komponente zugegeben. Besonders bevorzugt mischt man den Katalysator III) mit der mit gegenüber Isocyanaten reaktiven Komponente II) und fügt dann die Isocyanat-Komponente I) hinzu.

Der Katalysator kann als solcher oder gelöst in einem Lösungsmittel zugefügt werden. Bevorzugt ist dieses Lösungsmittel identisch mit der Flüssigkeit, die in Schritt a) beim Bereitstellen der Reaktivharz-Lösung bzw. -Dispersion verwendet wird. Der Katalysator wird in der Regel unter Rühren mit der Reaktivharz-Lösung bzw. -Dispersion vermischt.

In einer weiteren bevorzugten Ausführungsform werden dem Katalysator ein oder mehrere Carbonate zugegeben. Als Carbonate kommen beispielsweise Carbonate von Alkali- und Erdalkalimetallen in Betracht. In Betracht kommen auch die Hydrogencarbonate der betreffenden Metalle. Bevorzugt ist jedoch die Zugabe von Carbonaten der Alkali- und Erdalkalimetalle, besonders bevorzugt Calciumcarbonat. Besonders günstig ist die Zugabe von Carbonaten zum Katalysator, falls als Katalysator eine organische oder anorganische Säure eingesetzt wird, wie bei der Herstellung von Amino-Aldehyd-Harzen oder Phenol-Aldehyd-Harzen. Bevorzugt wird dem Katalysator ein Anteil von 0,5 bis 15 Gew.-% Carbonat bezogen auf den Katalysator in Reinsubstanz zugegeben. Besonders bevorzugt werden 1 bis 8 Gew.-% des Carbonats, insbesondere Calciumcarbonat, zugegeben. Durch die Zugabe des Carbonats, insbesondere des Calciumcarbonats, kann die Porengrößenverteilung der erfindungsgemäßen Materialien variiert werden.

Temperatur und Druck bei Schritt b) sind in der Regel nicht kritisch und betragen beispielsweise 10 bis 150, bevorzugt 20 bis 100°C bzw. 0,8 bis 50, bevorzugt 1 bis 10 bar.

In Schritt c) bringt man das makroporöse unbeschichtete Substrat mit der in Schritt b) erhaltenen Mischung in Kontakt. Das Inkontaktbringen kann derart ausgestaltet werden (Variante 1), dass nur die äußere Oberfläche des Substrats mit der Reaktivharz-Katalysator-Mischung benetzt wird, nicht jedoch die "innere" Oberfläche, also die Makroporen im Inneren des Substrats. Ebenso kann man Substrat und die Mischung so miteinander in Kontakt bringen (Variante 2), dass auch die innere Substratoberfläche benetzt wird, beispielsweise indem man die Mischung das poröse Substrat teilweise oder vollständig durchdringen lässt. Die Variante 2, Benetzung der inneren Oberfläche, ist bevorzugt und kann beispielsweise bei Filtern für anspruchsvolle Filtrationsaufgaben vorteilhaft sein.

Insbesondere bei Variante 1, Benetzung der äußeren Substratoberfläche, kann das Inkontaktbringen durch Sprühen, Streichen, Rollen, Walzen, Gießen, Rakeln der Mischung auf das unbeschichtete Substrat oder durch andere übliche Verfahren erfolgen. Diese Verfahren eignen sich insbesondere für dünne, eher flächige Substrate wie Gewebe, Vliese oder Filtrierpapiere. Bei flächigen Substraten können eine oder beide Seiten benetzt werden, wodurch später eine räumlich heterogene Verteilung der nanoporösen Beschichtung erhalten wird.

Für die bevorzugte Variante 2 eignet sich beispielsweise das Eintauchen des Substrats in die Mischung, oder auch die mehrfache Wiederholung der bei Variante 1 genannten Benetzungsverfahren, sodass die Mischung in die Makroporen des Substratinneren eindringen kann. Je nach den Abmessungen und der Beschaffenheit (Durchlässigkeit, Porengrößenverteilung, Grad der Offenzelligkeit) des Substrats sowie der Viskosität der Mischung kann für das Eintauchen eine gewisse Zeit erforderlich sein, z.B. 1 sec bis 6 Stunden. Substrate mit kleinen Abmessungen (kleinem Volumen bei großer Oberfläche) und guter Durchlässigkeit sowie niedrigviskose Mischungen erleichtern die Durchdringung; dadurch verkürzt sich die Dauer des Eintauchens bzw. sonstigen Inkontaktbringens.

Bevorzugt ist das erfindungsgemäße Verfahren dadurch gekennzeichnet, dass bei Schritt c) das Inkontaktbringen durch Eintauchen des unbeschichteten Substrats in die Mischung erfolgt. Das Eintauchen eignet sich insbesondere für dicke flächige, und für voluminöse Substrate, beispielsweise für dicke Gewebe und Vliese sowie für alle offenzellige Schäume.

Falls erforderlich, kann man in Schritt c) bei erhöhter Temperatur arbeiten, um die Viskosität der Mischung zu vermindern und auf diese Weise die Benetzung bzw. Durchdringung des Substrats zu erleichtern. Üblicherweise arbeitet man bei 20 bis 100, bevorzugt 25 bis 80°C. Insbesondere bei Variante 2 lässt sich die Durchdringung auch durch Arbeiten unter Druck erleichtern, wodurch die Mischung in das Innere des Substrats gepresst wird. In der Regel beträgt der Druck 0,8 bis 50, vorzugsweise 1 bis 10 bar.

Um in den Makroporen des Substrats vorhandene Luft zu entfernen und so das Eindringen der Mischung ins Substratinnere zu erleichtern, kann man das Substrat vor dem Inkontaktbringen im Vakuum "entlüften", oder das eingetauchte Substrat mit Ultraschall behandeln oder, sofern das Substrat elastisch ist und ein ausreichendes Rückstellvermögen aufweist, die Luft auch mechanisch durch Zusammendrücken oder Walken entfernen.

Sofern das Substrat durch Eintauchen mit der Mischung in Kontakt gebracht wird, kann es danach, beispielsweise nach der Durchdringung, aus der Mischung herausgenommen werden, bevor es in Schritt d) ausgehärtet wird. Bevorzugt bleibt das Substrat beim Aushärten eingetaucht.

In Schritt d) wird die in Schritt c) auf das Substrat aufgebrachte Mischung ausgehärtet. Es besteht die Vorstellung, dass sich beim Aushärten der Mischung ein nanoporöses Gel bildet, dessen Nanoporen noch mit Flüssigkeit - nämlich der in Schritt a) verwendeten Flüssigkeit, bevorzugt Wasser - gefüllt sind.

Das Aushärten erfolgt üblicherweise durch Ruhenlassen (Stehenlassen) des beschichteten Substrats, beispielsweise durch Ruhenlassen eines mit der Mischung besprühten Gewebes oder Vlieses, oder durch Stehenlassen eines in die Mischung eingetauchten Schaums, Gewebes oder Vlieses. Bei in die Mischung eingetauchten Substraten wird bevorzugt während des Aushärtens die Mischung nicht gerührt oder sonstwie durchmischt, weil dies die Ausbildung des Gels behindern könnte. Es hat sich als vorteilhaft erwiesen, die Mischung während des Aushärtens (Gelierens) abzudecken bzw. den Tauchbehälter zu verschließen.

Die Temperatur in Schritt d) beträgt beispielsweise 10 bis 150, bevorzugt 20 bis 100 und insbesondere 25 bis 80°C. Im einfachsten Fall lässt man durch Stehenlassen bei Raumtemperatur (20°C) aushärten. Je nach verwendetem Reaktivharz B lässt sich das Aushärten durch höhere Temperaturen beschleunigen. Beispielsweise kann man Beschichtungen aus Amino-Aldehyd-Harzen wie Melamin-Formaldehyd bei 40 bis 90, bevorzugt 50 bis 80°C aushärten.

Der Druck bei Schritt d) ist in der Regel nicht kritisch und beträgt z.B. 0,8 bis 50, bevorzugt 1 bis 10 bar.

Die Dauer des Aushärtens hängt u.a. von der Größe, Form und Porosität des Substrats, der Menge der aufgebrachten Mischung, ihrem Gehalt an Monomeren bzw. Vorkondensat und Katalysator, sowie der Temperatur ab und kann in weiten Grenzen variieren, beispielsweise 1 sec bis 48 Stunden, insbesondere 1 min bis 12 Stunden und besonders bevorzugt 5 min bis 6 Stunden. Die Dauer des Aushärtens ermittelt der Fachmann in wenigen einfach durchführbaren Vorversuchen ohne Substrat.

Das beim Aushärten entstehende Gel weist eine deutlich höhere Viskosität auf als die (üblicherweise niedrigviskose) Mischung vor dem Aushärten. Das Aushärten lässt sich folglich an einem Viskositätsanstieg ablesen und ist beendet, wenn die Viskosität der aufgebrachten Mischung nicht weiter ansteigt.

In Schritt e) wird die in der aufgebrachten Mischung enthaltene Flüssigkeit entfernt, also das in Schritt d) erhaltene Gel getrocknet.

Die Temperatur- und Druckbedingungen beim Entfernen der Flüssigkeit richten sich nach der Art der Flüssigkeit und dem Flüssigkeitsgehalt in der ausgehärteten Mischung (dem Gel). Beispielsweise kann man die Flüssigkeit bei einer Temperatur von -5 bis 150, bevorzugt 0 bis 120°C und einem Druck von 0,001 bis 10, bevorzugt 0,01 bis 1 bar entfernen. Ist die Flüssigkeit Wasser, wie es bevorzugt ist, so entfernt man das Wasser aus dem wasserhaltigen Gel beispielsweise bei Temperaturen von 0 bis 150, bevorzugt 10 bis 120 und besonders bevorzugt 15 bis 100°C, und bei Drucken von Hochvakuum (10⁻⁷ mbar) bis beispielsweise 10 bar, bevorzugt 1 mbar bis 10 bar und insbesondere 10 mbar bis 5 bar. Beispielsweise kann man bei einem Druck von 0,5 bis 2 bar, und bei einer Temperatur von 0 bis 100°C trocknen. Besonders bevorzugt wird bei Atmosphärendruck und 0 bis 80°C, insbesondere bei Raumtemperatur, getrocknet.

Zum Entfernen der Flüssigkeit entfernt man ggf. während des Aushärtens verwendete Abdeckungen oder Behälterdeckel und hält solange unter den genannten Druck- und Temperaturbedingungen, bis die Flüssigkeit durch Übergang in den gasförmigen Zustand entfernt ist, d.h. man verdunstet (verdampft) die Flüssigkeit.

Man kann an der Luft, oder falls die Mischung sauerstoffempfindlich ist, auch an anderen Gasen wie Stickstoff oder Edelgasen trocknen, und dazu ggf. einen Trockenschrank oder andere geeignete Vorrichtungen verwenden.

Das Trocknen kann durch Anwendung eines Vakuums beschleunigt bzw. vervollständigt werden. Um die Trocknungswirkung weiter zu verbessern, kann man diese Vakuumtrocknung bei einer höheren Temperatur vornehmen als das Trocknen bei üblichem Druck. Beispielsweise kann man den Großteil des Wassers zunächst bei Raumtemperatur und Atmosphärendruck innerhalb von z.B. 8 bis 12 Tagen entfernen, und danach bei 40 bis 80°C unter einem Vakuum von z.B. 1 bis 100, insbesondere 10 bis 30 mbar, das restliche Wasser innerhalb von 1 bis 5 Tagen entfernen.

Statt einer solchen stufenweisen Trocknung kann man den Druck während des Trocknens auch kontinuierlich, beispielsweise linear oder exponentiell absenken, bzw. die Temperatur in solcher Weise erhöhen, d.h. entlang eines Druck- bzw. Temperaturprogramms trocknen.

Naturgemäß trocknet die Mischung umso schneller, je geringer der Feuchtigkeitsgehalt der Luft ist. Das Trocknen lässt sich auch durch Umwälzung und/oder Austausch der Umgebungsluft beschleunigen. Gleiches gilt sinngemäß für andere flüssige Phasen als Wasser und andere Gase als Luft.

Beim Trocknen in Schritt e) wird die Flüssigkeit in der Regel vollständig oder bis auf einen Restgehalt von 0,01 bis 1 Gew.-%, bezogen auf die fertige, nanoporöse Reaktivharz-Polymerschicht, entfernt.

Alternativ oder zusätzlich zur Verwendung des Katalysators kann man das Aushärten auch thermisch vornehmen.

### Eigenschaften und Verwendung des porösen Materials

Die strukturellen Aspekte des dem porösen Material zu Grunde liegenden Substrats wurden bereits weiter oben erläutert. Erfindungsgemäß ist die Oberfläche des makroporösen Substrats mit einem Polymer B auf Basis von Reaktivharzen beschichtet.

Unter Beschichtung ist vorzugsweise das Vorliegen einer Masse aus ausgehärtetem Reaktivharz in flächenhafter Ausdehnung auf den Stegen, Wänden und/oder Fasern des Substrates zu verstehen. Vorzugsweise handelt es sich bei einer Beschichtung um eine teilweise oder ganz mit dem Beschichtungsmaterial bedeckte Oberfläche des Substrates, besonders bevorzugt ist die Porenoberfläche des Substrates (das heißt, die innere und äußere Oberfläche) ganz oder teilweise mit dem Beschichtungsmaterial bedeckt. Der Begriff "bedeckt" schließt ein vollständiges Auffüllen der Makroporen aus.

Vorzugsweise ist die Porenoberfläche des Substrats zu einem Anteil von mindestens 10 % der gesamten Porenoberfläche des Substrates, bevorzugt zu mindestens 30 %, insbesondere zu mindestens 50 % mit dem Beschichtungsmaterial bedeckt.

Der Anteil der beschichteten Porenoberfläche (der Bedeckungungsgrad) und die mittlere Schichtdicke werden mittels Rasterelektronenmikroskopie und bildanalytischen Verfahren bestimmt. Dabei ist darauf zu achten, dass mindestens 20 Einzelbestimmungen erfolgen, um einen statistisch bedeutungsvollen Mittelwert zu erhalten.

Die mittlere Schichtdicke, bestimmt als zahlengewichtetes Mittel durch Rasterelektronenmikroskopie und Bildanalyse an mindestens 20 Einzelmessungen, ist dabei vorzugsweise kleiner als der mittlere Porendurchmesser des Substrats, bestimmt als volumengewichteter Mittelwert mittels Quecksilberintrusionsmessung nach DIN 66133. Das poröse Material ist demzufolge aufgrund der Makroporen des Substrats und der Nanoporen der Beschichtung bevorzugt sowohl makroporös als auch nanoporös.

Die Dicke der fertigen, nanoporösen Reaktivharz-Polymerschicht, wie sie nach dem Entfernen der Flüssigkeit (Schritt e) erhalten wird, beträgt in der Regel 0,01 bis 10, bevorzugt 0,05 bis 1 und insbesondere 0,1 bis 0,9 µm.

Falls gewünscht kann man die beschriebenen Verfahren ein- oder mehrmals wiederholen und auf diese Weise eine zweite bzw. weitere nanoporöse Polymerschicht aufbringen. Dabei können die Reaktivharze B der einzelnen nanoporösen Schichten gleich oder verschieden sein.

In dem erfindungsgemäßen Material kann die nanoporöse Beschichtung mit Polymer B die Makroporen des Substrats gleichmäßig oder ungleichmäßig auskleiden beziehungsweise die Stege, Fasern und/oder Wände der Makroporen vollständig oder unvollständig bedecken. Es können auch Makroporen vorliegen, worin das Reaktivharz vor dem Aushärten nach unten zusammengelaufen war und die im erfindungsgemäßen Material partiell gefüllt mit dem ausgehärteten Reaktivharz gefüllt sind. Bevorzugt ist jedoch ein poröses Material, dessen Makroporen mit ausgehärtetem Reaktivharz nicht durchweg gefüllt sind und bei dem somit eine Beschichtung im oben definierten Sinne vorliegt.

Wie eingangs erwähnt, beträgt der mittlere Durchmesser der Poren in der nanoporösen Beschichtung maximal 1000 nm, bevorzugt maximal 500 nm. Ebenfalls bevorzugt liegt er bei mindestens 1, besonders bevorzugt mindestens 10 nm. Bevorzugt handelt es sich beim mittleren Durchmesser der Poren in der nanoporösen Beschichtung um einen zahlenmittleren Durchmesser, der durch Rasterelektronenmikroskopie bestimmt wird.

Falls das Material zwei oder mehr nanoporöse Reaktivharz-Beschichtungen aufweist, können sich die Dicken und Porendurchmesser der einzelnen Schichten unterscheiden.

Strukturell betrachtet handelt es sich bei dem erfindungsgemäßen, porösen Material (also dem beschichteten Substrat) bevorzugt um einen offenzelligen Schaum, ein Gewebe, ein Vlies oder ein Filtrierpapier, das heißt, das erfindungsgemäße poröse Material behält die offenzellige Struktur des Substrates zumindest teilweise bei. Besonders bevorzugt handelt es sich bei dem erfindungsgemäßen, porösen Material um einen offenzelligen Schaum oder ein Vlies, insbesondere um einen offenzelligen Schaum.

Das erfindungsgemäße poröse Material, beispielsweise der Schaum, das Gewebe, Vlies oder Filtrierpapier, kann hart, fest, starr, flexibel, biegsam, weich oder elastisch sein, und rückstellende Eigenschaften aufweisen oder nicht.

Das erfindungsgemäße poröse Material aus makroporösem Substrat und nanoporöser Reaktivharz-Schicht zeichnet sich durch mindestens eine, bevorzugt mindestens zwei, insbesondere alle vier der folgenden Eigenschaften aus, wobei ganz besonders bevorzugt zumindest die Eigenschaften 3) und 4) erfüllt sind:
1) eine große intrinsische Oberfläche. Sie beträgt in der Regel mindestens 10, bevorzugt mindestens 20 und besonders bevorzugt mindestens 50 m²/g, ermittelt mittels Gasadsorption nach dem BET (Brunauer, Emmet, Teller)-Verfahren gemäß DIN 66131.
2) eine geringe Dichte. Sie liegt üblicherweise bei maximal 300, bevorzugt maximal 200 und insbesondere maximal 100 g/dm³.
3) die Porengrößenverteilung über alle Poren (Nanoporen und Makroporen) ist bimodal. Bevorzugt ist die Porengrößenverteilung breit, so dass sowohl Nanoporen als auch Makroporen enthalten sind.
4) die Porengrößenverteilung über alle Poren (Nanoporen und Makroporen), bestimmt mittels Quecksilber-Intrusionsmessung wie eingangs beschrieben, ist derart, dass üblicherweise 1 bis 60, bevorzugt 2 bis 50 und besonders bevorzugt 3 bis 40 Vol.-% der Poren einen Durchmesser von maximal 1 µm (1000 nm) aufweisen.

Aufgrund dieser Eigenschaften kann das erfindungsgemäße Material für verschiedene Zwecke eingesetzt werden. Insbesondere wegen der großen intrinsischen Oberfläche weisen die erfindungsgemäßen Materialien eine hohe Filterleistung auf.

Bevorzugt und ebenfalls Gegenstand der Erfindung ist die Verwendung des Materials als Filter für Gase oder Flüssigkeiten. Dabei bezeichnet "Gase" bzw. "Flüssigkeiten" die fluide Phase, in der (ggf. herauszufilternde) Feststoffe dispergiert sein können. Bei Gasen können auch Flüssigkeiten beziehungsweise Aerosol- Partikel herausgefiltert werden.

Bevorzugte Verwendungen sind solche als Filter
- bei der Gebäudeklimatisierung, z.B. an Klimaanlagen und bei der Reinigung von Frischluft (Zuluft) oder Abluft in Gebäuden oder Räumen, beispielsweise Wohngebäuden, Verwaltungsgebäuden, Industriegebäuden oder Lagergebäuden,
- bei der Abgasreinigung von Industrieanlagen und Kraftwerken,
- bei der Abgasreinigung von Fahrzeugen,
- bei Fahrzeugklimaanlagen,
- bei der Reinigung der Abluft in Industrien mit hoher Staubemission, beispielsweise Textilgewerbe, Baustoffindustrie, Pigmentindustrie, Holzverarbeitung, Möbelindustrie, sowie bei der Förderung, Aufbereitung und Verarbeitung von Kohle, Steinsalz, Mineralien, Erzen oder anderen Bodenschätzen,
- bei der Reinigung von Zuluft für Reinsträume, z.B. in der Halbleiterfertigung oder in der chemischen Spurenanalytik,
- bei der Reinigung von Zuluft bei der Herstellung von Medikamenten oder Medizinprodukten,
- bei der Reinigung von Zu- oder Abluft in Krankenhäusern, beispielsweise Infektionsstationen, oder in Forschungseinrichtungen, beispielsweise chemischen, bakteriologischen oder virologischen Laboratorien oder Technika,
- bei der Filtration von Suspensionen oder Fest/Flüssig-Mischungen aller Art, z.B. in der Chemie, chemischen Technologie, Biologie, Biochemie, Biotechnologie, Gentechnologie, Molekularbiologie, Lebensmitteltechnologie,
- bei der Reinigung von Flüssigkeiten und Gasen aller Art von unerwünschten Feststoffen,
- bei der Reinigung, Behandlung oder Aufbereitung von Wasser, beispielsweise Trinkwasser oder Abwasser,
- zur Abtrennung von Flüssigkeitströpfchen aus Gasen, beispielsweise Aerosolen oder Spritznebeln in Lackierereien und Spritzkabinen,
- in Atemmasken, Schutzmasken und Beatmungsgeräten,
- im Bereich der Nanotechnologie.

Dabei kann es sich um Verwendungen im Labormaßstab, im Technikumsmaßstab oder in der industriellen Produktion handeln.

Bei den vom Filter zurückgehaltenen Feststoffen kann es sich beispielsweise um organische oder anorganische Partikel, Staub, Feinstaub, Fasern, Nanopartikel, Bakterien, Viren, Sporen (z.B. von Pilzen, Algen, Flechten oder Bakterien aller Art handeln.

Der zurückgehaltene Feststoff kann unerwünscht sein, beispielsweise Staub in Klimaanlagen oder pathogene Bakterien in Krankenhäusern, oder ein Wertprodukt sein, das abgetrennt werden soll, z.B. ein zuvor ausgefällter Feststoff in der Chemie. Gleiches gilt sinngemäß für zurückgehaltene Flüssigkeiten.

Gegenstand der Erfindung sind auch Filter enthaltend das oben beschriebene poröse Material, und ein Verfahren zur Filtration von Gasen oder Flüssigkeiten, dadurch gekennzeichnet, dass man das erfindungsgemäße Material oder einen erfindungsgemäßen Filter mitverwendet.

Die erfindungsgemäßen porösen Materialien lassen sich auf vielfältige Weise als Filter einsetzen. Sie können auf einfache Weise hergestellt werden und weisen bei Ihrer Verwendung als Filter ein gutes Rückhaltevermögen, einen geringen Druckverlust und eine hohe Standzeit auf. Die erfindungsgemäßen Materialien weisen eine hohe mechanische Stabilität auf und sind als Filtermaterial auch bei hohen Durchflussraten einsetzbar. Filter mit ausschließlich Nanoporen weisen demgegenüber hohe Druckverluste auf und können bei hohen Durchflussraten nicht eingesetzt werden.

### Beispiele

Die mittlere Schichtdicke der Beschichtungen wurde ermittelt, indem die Faser beziehungsweise der Steg aus dem Substrat entlang der Beobachtungsrichtung im Rasterelektronenmikroskop (REM) ausgerichtet und anschließend durch Bildanalyse der Abstand vom Substrat bis zum äußersten Punkt an der Phasengrenzfläche Polymer-Luft vermessen wurde. Die Bildung des zahlengewichteten Mittelwertes erfolgte durch Einzelmessung an 20 Fasern.

Der Fraktionsabscheidegrad entspricht dem Anteil der Partikel, die im Rahmen einer Messung mit dem Testmaterial als Filter zurückgehalten werden. Der Fraktionsabscheidegrad wurde mit einem zylinderförmigen Filter mit 50 mm Durchmesser und 50 mm Höhe ermittelt. Als Testaerosol wurde ein NaCl-Aerosol mit 1 µm Partikeldurchmesser verwendet. Der Volumenstrom betrug 600 I/h bei 23°C.

Es wurde an der Luft bei Umgebungsdruck (etwa 1000 mbar) gearbeitet.

### Beispiel 1:

a) Man gab bei 20°C 26 g einer wässrigen Lösung eines Melamin-Formaldehyd-Vorkondensats in ein Becherglas. Der Gehalt der Lösung betrug 16 Gew.-% und das Molverhältnis Melamin zu Formaldehyd betrug 1 : 1,5.
b) Es wurden unter Rühren bei 20°C 4,3 g einer 100 gew.-%igen Essigsäure zugefügt. Man erhielt eine klare, niedrigviskose Mischung.
c) In diese Mischung tauchte man als Substrat einen Schaum aus Melamin-Formaldehyd-Harz ein. Es wurde der Schaum Basotect® von BASF verwendet. Der Schaum war zylinderförmig (25 mm Durchmesser, 40 mm Höhe) und wurde vollständig von der Mischung bedeckt.
d) Man ließ in eingetauchtem Zustand 24 Stunden bei 60°C aushärten.
e) Anschließend wurde der Schaumzylinder aus dem Becherglas genommen und die Flüssigkeit (Wasser und Essigsäure) durch 7 Tage langes Trocknen bei 20°C entfernt.

Die mittlere Schichtdicke (Zahlenmittel) der Beschichtung betrug 10 µm. Das erhaltene Material hatte ein Oberfläche nach BET von 123,2 m²/g. Das in Schritt c) eingesetzte unbeschichtete Substrat hatte eine Oberfläche nach BET von weniger als 3 m²/g und einen volumengewichteten mittleren Porendurchmesser von 162 µm ermittelt gemäß Hg-Intrusionsmessung nach DIN 66133. Nach erfolgter Beschichtung und Trocknung wurde für das erfindungsgemäße poröse Material gemäß Hg-Intrusionsmessung nach DIN 66133 ein volumengewichteter mittlerer Porendurchmesser von 12,1 µm mit einem Anteil von Poren im Bereich kleiner 1000 nm von 31,5 Vol.-% ermittelt. Die Porendurchmesser der nanoporösen Beschichtung, bestimmt mittels Rasterelektronenmikroskopie, lagen im Bereich von 10 bis 1000 nm.

### Beispiel 2:

a) Man gab bei 20°C 28,5 g einer wässrigen Lösung eines Melamin-Formaldehyd-Vorkondensats in ein Becherglas. Der Gehalt der Lösung betrug 7,7 Gew.-% und das Molverhältnis Melamin zu Formaldehyd betrug 1 : 1,5.
b) Es wurden unter Rühren bei 20°C 1,56 g einer 100 gew.-%igen Essigsäure zugefügt. Man erhielt eine klare, niedrigviskose Mischung.
c) In diese Mischung tauchte man als Substrat einen Schaum aus Melamin-Formaldehyd-Harz ein. Es wurde der Schaum Basotect® von BASF verwendet. Der Schaum war zylinderförmig (25 mm Durchmesser, 40 mm Höhe) und wurde vollständig von der Mischung bedeckt.
d) Man ließ in eingetauchtem Zustand 24 Stunden bei 60°C aushärten.
e) Anschließend wurde der Schaumzylinder aus dem Becherglas genommen und die Flüssigkeit (Wasser und Essigsäure) durch 7 Tage langes Trocknen bei 20°C entfernt.

Die mittlere Schichtdicke (Zahlenmittel) der Beschichtung betrug 5 µm. Das erhaltene Material hatte ein Oberfläche nach BET von 42 m²/g. Das in Schritt c) eingesetzte unbeschichtete Substrat hatte eine Oberfläche nach BET von weniger als 3 m²/g und einen volumengewichteten mittleren Porendurchmesser von 162 µm ermittelt gemäß Hg-Intrusionsmessung nach DIN 66133. Nach erfolgter Beschichtung und Trocknung wurde für das erfindungsgemäße poröse Material gemäß Hg-Intrusionsmessung nach DIN 66133 ein volumengewichteter mittlerer Porendurchmesser von 50,8 µm mit einem Anteil von Poren im Bereich kleiner 1000 nm von 3,3 Vol.-% ermittelt. Die Porendurchmesser der nanoporösen Beschichtung, bestimmt mittels Rasterelektronenmikroskopie, lagen im Bereich von 10 bis 800 nm.

### Beispiel 3:

a) Man gab bei 20°C 29 g einer wässrigen Lösung eines Melamin-Formaldehyd-. Vorkondensats in ein Becherglas. Der Gehalt der Lösung betrug 6 Gew.-% und das Molverhältnis Melamin zu Formaldehyd betrug 1 : 1,5.
b) Es wurden unter Rühren bei 20°C 0,936 g einer 100 gew.-%igen Ameisensäure zugefügt. Man erhielt eine klare, niedrigviskose Mischung.
c) In diese Mischung tauchte man als Substrat einen Schaum aus Melamin-Formaldehyd-Harz ein. Es wurde der Schaum Basotect® von BASF verwendet. Der Schaum war zylinderförmig (25 mm Durchmesser, 40 mm Höhe) und wurde vollständig von der Mischung bedeckt.
d) Man ließ in eingetauchtem Zustand 48 Stunden bei 60°C aushärten.
e) Anschließend wurde der Schaumzylinder aus dem Becherglas genommen und die Flüssigkeit (Wasser und Ameisensäure) durch 7 Tage langes Trocknen bei 20°C entfernt.

Die mittlere Schichtdicke (Zahlenmittel) der Beschichtung betrug 2,5 µm. Das erhaltene Material hatte ein Oberfläche nach BET von 70,3 m²/g. Das in Schritt c) eingesetzte unbeschichtete Substrat hatte eine Oberfläche nach BET von weniger als 3 m²/g und einen volumengewichteten mittleren Porendurchmesser von 162 µm ermittelt gemäß Hg-Intrusionsmessung nach DIN 66133. Die Porendurchmesser der nanoporösen Beschichtung, bestimmt mittels Rasterelektronenmikroskopie, lagen im Bereich von 10 bis 500 nm.

### Beispiel 4:

a) Man gab bei 20°C 28.7 g einer wässrigen Lösung eines Melamin-Formaldehyd-Vorkondensats in ein Becherglas. Der Gehalt der Lösung betrug 6.5 Gew.-% und das Molverhältnis Melamin zu Formaldehyd betrug 1 : 1,5.
b) Es wurden unter Rühren bei 20°C 1.33 g einer 100 gew.-%igen Essigsäure zugefügt. Man erhielt eine klare, niedrigviskose Mischung.
c) In diese Mischung tauchte man als Substrat einen Schaum aus Melamin-Formaldehyd-Harz ein. Es wurde der Schaum Basotect® von BASF verwendet. Der Schaum war zylinderförmig (25 mm Durchmesser, 40 mm Höhe) und wurde vollständig von der Mischung bedeckt.
d) Man ließ in eingetauchtem Zustand 48 Stunden bei 60°C aushärten.
e) Anschließend wurde der Schaumzylinder aus dem Becherglas genommen und die Flüssigkeit (Wasser und Ameisensäure) durch 7 Tage langes Trocknen bei 20°C entfernt.

Die mittlere Schichtdicke (Zahlenmittel) der Beschichtung betrug 2,5 µm. Das erhaltene Material hatte ein Oberfläche nach BET von 26 m²/g. Das in Schritt c) eingesetzte unbeschichtete Substrat hatte eine Oberfläche nach BET von weniger als 3 m²/g und einen volumengewichteten mittleren Porendurchmesser von 162 µm ermittelt gemäß Hg-Intrusionsmessung nach DIN 66133. Nach erfolgter Beschichtung und Trocknung wurde für das erfindungsgemäße poröse Material gemäß Hg-Intrusionsmessung nach DIN 66133 ein volumengewichteter mittlerer Porendurchmesser von 80,1 µm mit einem Anteil von Poren im Bereich kleiner 1000 nm von 3,7 Vol.-% ermittelt. Die Porendurchmesser der nanoporösen Beschichtung, bestimmt mittels Rasterelektronenmikroskopie, lagen im Bereich von 10 bis 500 nm.

Der Fraktionsabscheidegrad des in Schritt c) eingesetzten unbeschichteten Substrats betrug 32%. Der Fraktionsabscheidegrad verbesserte sich im erfindungsgemäßen porösen Material (nach Aufbringen der Beschichtung und Trocknen) auf 90%. Bei einer Durchflussrate von 19800 I/h betrug der Druckverlust 87 Pa.

### Beispiel 5:

a) Man gab bei 20°C 0,5 g einer wässrigen Lösung eines Melamin-Formaldehyd-Vorkondensats in ein Becherglas. Der Gehalt der Lösung betrug 6 Gew.-% und das Molverhältnis Melamin zu Formaldehyd betrug 1 : 1,5.
b) Es wurden unter Rühren bei 20°C 0,026 g einer 100 gew.-%igen Essigsäure zugefügt. Man erhielt eine klare, niedrigviskose Mischung.
c) In diese Mischung tauchte man als Substrat ein rundes Stück Zellstoff von 0,5 mm Dicke und 25 mm Durchmesser ein. Der Zellstoff wurde vollständig von der Mischung bedeckt.
d) Man ließ in eingetauchtem Zustand 24 Stunden bei 60°C aushärten.
e) Anschließend wurde der Zellstoff aus dem Becherglas genommen und die Flüssigkeit (Wasser und Essigsäure) durch 7 Tage langes Trocknen bei 20°C entfernt.

Die mittlere Schichtdicke (Zahlenmittel) der Beschichtung betrug 1 µm. Das erhaltene poröse Material hatte eine Oberfläche nach BET von 4,7 m²/g, wohingegen am unbeschichteten Zellstoff aufgrund der geringen intrinsischen Oberfläche keine BET-Bestimmung durchgeführt werden konnte. Die Porendurchmesser der nanoporösen Beschichtung, bestimmt mittels Rasterelektronenmikroskopie, lagen im Bereich von 10 bis 500 nm.

### Beispiel 6:

a) Man gab bei 20°C 7,1 g einer wässrigen Lösung eines Melamin-Formaldehyd-Vorkondensats in ein Becherglas. Der Gehalt der Lösung betrug 6 Gew.-% und das Molverhältnis Melamin zu Formaldehyd betrug 1 : 1,5.
b) Es wurden unter Rühren bei 20°C 0,4 g einer 100 gew.-%igen Essigsäure zugefügt. Man erhielt eine klare, niedrigviskose Mischung.
c) In diese Mischung tauchte man als Substrat ein rundes Vlies aus Faserglas von 10 mm Dicke und 25 mm Durchmesser ein. Das Vlies wurde vollständig von der Mischung bedeckt.
d) Man ließ in eingetauchtem Zustand 24 Stunden bei 60°C aushärten.
e) Anschließend wurde das Vlies aus dem Becherglas genommen und die Flüssigkeit (Wasser und Essigsäure) durch 7 Tage langes Trocknen bei 20°C entfernt.

Die mittlere Schichtdicke (Zahlenmittel) der Beschichtung betrug 1 µm. Das erhaltene poröse Material hatte eine Oberfläche nach BET von 12,2 m²/g, wohingegen am unbeschichteten Faserglasvlies aufgrund der geringen intrinsischen Oberfläche keine BET-Bestimmung durchgeführt werden konnte. Die Porendurchmesser der nanoporösen Beschichtung, bestimmt mittels Rasterelektronenmikroskopie, lagen im Bereich von 10 bis 600 nm.

### Beispiel 7:

a) Man gab unter Rühren bei 20°C 30 mg Calciumcarbonat in 0,9 g einer 100 Gew.-%igen Ameisensäure und erhielt eine klare Lösung.
b) Die in a) erhaltene Lösung wurde bei 20°C mit 29,1 g einer wässrigen Lösung eines Melamin-Formaldehyd-Vorkondensats vermischt. Der Gehalt der letzteren Lösung betrug 5,8 Gew.-% und das Molverhältnis Melamin zu Formaldehyd betrug 1 : 1,5.
c) In diese Mischung tauchte man als Substrat einen Schaum aus Melamin-Formaldehyd-Harz ein. Es wurde der Schaum Basotect® von BASF verwendet. Der Schaum war zylinderförmig (25 mm Durchmesser, 40 mm Höhe) und wurde vollständig von der Mischung bedeckt.
d) Man ließ in eingetauchtem Zustand 24 Stunden bei 60°C aushärten.
e) Anschließend wurde die Flüssigkeit (Wasser und Ameisensäure) aus dem Schaumzylinder durch 7 Tage langes Trocknen bei 20°C entfernt.

Das erhaltene poröse Material hatte eine Oberfläche nach BET von 35,2 m²/g. Das in Schritt c) eingesetzte unbeschichtete Substrat hatte eine Oberfläche nach BET von weniger als 3 m²/g. Die Porendurchmesser der nanoporösen Beschichtung, bestimmt mittels Rasterelektronenmikroskopie, lagen im Bereich von 10 bis 500 nm.

### Beispiel 8:

a) Man gab bei 20°C g 140 mg TDI in 7,9 g 2-Butanon und löste unter Rühren 65 mg Phloroglucinol und 2µl DBU als Katalysator in 8 g 2-Butanon in jeweils zwei Bechergläsern.
b) Es wurden beide Lösung gemischt. Man erhielt eine klare, niedrigviskose Mischung.
c) In diese Mischung tauchte man als Substrat ein rundes Vlies aus Polyethylenterephthalat (PET) von 3 mm Dicke und 50 mm Durchmesser ein. Der Überstand wurde abdekantiert. Das Vlies wurde vollständig von der Mischung bedeckt.
d) Man ließ in eingetauchtem Zustand 24 Stunden bei Raumtemperatur aushärten.
e) Anschließend wurde das Vlies aus dem Becherglas genommen und die Flüssigkeit (2-Butanon) durch 7 Tage langes Trocknen bei 20°C entfernt.

Das erhaltene poröse Material hatte eine Oberfläche nach BET von 18,3 m²/g, wohingegen am unbeschichteten PET-Vlies aufgrund der geringen intrinsischen Oberfläche keine BET-Bestimmung durchgeführt werden konnte. Die zahlenmittlere Schichtdicke der Beschichtung betrug 0,5 µm. Die Porendurchmesser der nanoporösen Beschichtung, bestimmt mittels Rasterelektronenmikroskopie, lagen im Bereich von 10 bis 600 nm.

### Beispiel 9V - nanoporöser Schaum ohne Substrat:

a) Man gab unter Rühren bei 20°C 120 mg Calciumcarbonat in 2,7 g einer 100 gew.-%igen Ameisensäure und erhielt eine klare Lösung.
b) Die in a) erhaltene Lösung wurde bei 20°C mit 27,3 g einer wässrigen Lösung eines Melamin-Formaldehyd-Vorkondensats vermischt. Der Gehalt der letzteren Lösung betrug 17 Gew.-% und das Molverhältnis Melamin zu Formaldehyd betrug 1 : 1,5.
c) Man ließ 24 Stunden bei 60°C aushärten.
d) Anschließend wurde die Flüssigkeit (Wasser und Ameisensäure) durch 7 Tage langes Trocknen bei 20°C entfernt.

Der erhaltene nanoporöse Schaum besaß gemäß Hg-Intrusionsmessung nach DIN 66133 folgende Eigenschaften: mittlerer Porendurchmesser 696 nm, Porosität 83 Vol-%, Anteil der Poren kleiner 1000 nm: 70 Vol.-%. Die Dichte betrug 281 g/dm³.

Die Beispiele zeigen, dass sich auf einfache Weise erfindungsgemäße poröse Materialien verschiedener Art herstellen ließen. Durch die erfindungsgemäße Beschichtung konnte die Filterleistung, gemessen am Fraktionsabscheidegrad, erheblich verbessert werden. Die erfindungsgemäßen porösen Materialien weisen einen sehr geringen Druckverlust bei hohen Durchflussraten des zu filternden Gaststromes auf.

## Patentansprüche

1. Poröses Material enthaltend ein Substrat auf Basis mindestens eines organischen Polymers A und eine Beschichtung, wobei
i) das unbeschichtete Substrat auf Basis des organischen Polymers A makroporös ist,
ii) die Oberfläche des makroporösen Substrats mit einem Polymer B auf Basis von Reaktivharzen beschichtet ist, und
iii) diese Beschichtung mit einem Polymer B nanoporös ist und der mittlere Durchmesser der Nanoporen maximal 1000 nm beträgt
und wobei Aufzeichnungsmaterialien ausgenommen sind.

2. Poröses Material enthaltend ein Substrat auf Basis mindestens eines organischen Polymers A und eine Beschichtung, wobei
i) das Substrat auf Basis des mindestens einen organischen Polymers A makroporös und offenzellig ist,
ii) die Porenoberfläche des Substrats mit mindestens einem Polymer B auf Basis von Reaktivharzen beschichtet ist, und
iii) die Beschichtung mit mindestens einem Polymer B nanoporös ist und der mittlere Durchmesser der Nanoporen maximal 1000 nm beträgt und die mittlere Schichtdicke der Beschichtung kleiner ist als der mittlere Porendurchmesser des unbeschichteten Substrats.

3. Poröses Material nach den Ansprüchen 1 oder 2, **dadurch gekennzeichnet, dass** die Beschichtung die Porenoberfläche des Substrats zumindest teilweise bedeckt.

4. Poröses Material nach den Ansprüchen 1 bis 3, **dadurch gekennzeichnet, dass** die Beschichtung eine mittlere Schichtdicke von 0,01 bis 10 µm aufweist.

5. Poröses Material nach den Ansprüchen 1 bis 4, **dadurch gekennzeichnet, dass** mindestens 20 % der Porenoberfläche des Substrats mit dem Polymer B bedeckt ist.

6. Poröses Material nach den Ansprüchen 1 bis 5, **dadurch gekennzeichnet, dass** es sich bei dem unbeschichteten Substrat um einen offenzelligen Schaum, ein Gewebe, ein Vlies oder ein Filtrierpapier handelt.

7. Poröses Material nach den Ansprüchen 1 bis 6, **dadurch gekennzeichnet, dass** das Polymer A des unbeschichteten Substrats aufgebaut ist aus umgesetzten Amino-Aldehyd-Harzen, umgesetzten Phenol-Aldehyd-Harzen, Polystyrol, Polyvinylchlorid, Polyurethanen, Polyamiden, Polyestern, Polyolefinen, Cellulose oder Fasern auf Basis von Cellulose.

8. Poröses Material nach den Ansprüchen 1 bis 5, **dadurch gekennzeichnet, dass** das unbeschichtete Substrat ausgewählt ist aus Schäumen auf Basis von Amino-Aldehyd-Harzen, Phenol-Aldehyd-Harzen und Polyurethanen.

9. Poröses Material nach den Ansprüchen 1 bis 5, **dadurch gekennzeichnet, dass** das unbeschichtete Substrat ausgewählt ist aus Geweben oder Vliesen auf Basis von Polyestern oder Cellulose.

10. Poröses Material nach den Ansprüchen 1 bis 9, **dadurch gekennzeichnet, dass** das Reaktivharz ausgewählt ist aus Amino-Aldehyd-Harzen, Phenol-Aldehyd-Harzen und Gelvorstufen auf Basis von Isocyanaten.

11. Poröses Material nach den Ansprüchen 1 bis 10, **dadurch gekennzeichnet, dass** das Reaktivharz ausgewählt ist aus Melamin-Formaldehyd-Harzen, Harnstoff-Formaldehyd-Harzen, Melamin/Harnstoff-Formaldehyd-Harzen und Gelvorstufen auf Basis von Isocyanaten und Phenolen.

12. Verfahren zur Herstellung eines porösen Materials gemäß den Ansprüchen 1 bis 11, **dadurch gekennzeichnet, dass** das Reaktivharz mit dem makroporösen unbeschichteten Substrat in Kontakt gebracht und danach zum Polymer B ausgehärtet wird.

13. Verfahren nach Anspruch 12, umfassend folgende Schritte
a) das Reaktivharz wird als Lösung bzw. Dispersion in einer Flüssigkeit bereitgestellt
b) zu der im vorigen Schritt erhaltenen Mischung wird ein Katalysator gegeben
c) das makroporöse unbeschichtete Substrat wird mit der im vorigen Schritt erhaltenen Mischung in Kontakt gebracht
d) die im vorigen Schritt mit dem Substrat in Kontakt gebrachte Mischung wird in Gegenwart des Substrats ausgehärtet
e) die in der Mischung enthaltene Flüssigkeit wird entfernt,
wobei die Schritte in der Reihenfolge a-b-c-d-e oder a-c-b-d-e ausgeführt werden.

14. Verfahren nach den Ansprüchen 12 oder 13, **dadurch gekennzeichnet, dass** bei Schritt c) das Inkontaktbringen durch Eintauchen des unbeschichteten Substrats in die Mischung erfolgt.

15. Verwendung eines porösen Materials gemäß den Ansprüchen 1 bis 11 als Filter für Gase oder Flüssigkeiten.

16. Filter enthaltend ein poröses Material gemäß den Ansprüchen 1 bis 11.

17. Verfahren zur Filtration von Gasen oder Flüssigkeiten, **dadurch gekennzeichnet, dass** man das Gas oder die Flüssigkeit durch ein Material gemäß den Ansprüchen 1 bis 11 oder durch ein Filter gemäß Anspruch 16 leitet.

## Claims

1. A porous material comprising a substrate based on at least one organic polymer A and a coating, where
i) the uncoated substrate based on the organic polymer A is macroporous,
ii) the surface of the macroporous substrate is coated with a polymer B based on reactive resins, and
iii) this coating with a polymer B is nanoporous and the mean diameter of the nanopores is not more than 1000 nm,
and recording materials being excepted.

2. A porous material comprising a substrate based on at least one organic polymer A and a coating, where
i) the substrate based on the at least one organic polymer A is macroporous and open-cell,
ii) the pore surface of the substrate is coated with at least one polymer B based on reactive resins, and
iii) the coating with at least one polymer B is nanoporous and the mean diameter of the nanopores is not more than 1000 nm and the mean layer thickness of the coating is less than the mean pore diameter of the uncoated substrate.

3. The porous material according to either of claims 1 and 2, wherein the coating at least partly covers the pore surface of the substrate.

4. The porous material according to claims 1 to 3, wherein the coating has a mean layer thickness of from 0.01 to 10 µm.

5. The porous material according to claims 1 to 4, wherein at least 20% of the pore surface of the substrate is covered by the polymer B.

6. The porous material according to claims 1 to 5, wherein the uncoated substrate is an open-cell foam, a woven fabric, a nonwoven or a filter paper.

7. The porous material according to any of claims 1 to 6, wherein the polymer A of the uncoated substrate is composed of reacted amino-aldehyde resins, reacted phenol-aldehyde resins, polystyrene, polyvinyl chloride, polyurethanes, polyamides, polyesters, polyolefins, cellulose or fibers based on cellulose.

8. The porous material according to any of claims 1 to 5, wherein the uncoated substrate is selected from foams based on amino-aldehyde resins, phenol-aldehyde resins and polyurethanes.

9. The porous material according to any of claims 1 to 5, wherein the uncoated substrate is selected from woven fabrics or nonwovens based on polyester or cellulose.

10. The porous material according to any of claims 1 to 9, wherein the reactive resin is selected from amino-aldehyde resins, phenol-aldehyde resins and gel precursors based on isocyanates.

11. The porous material according to any of claims 1 to 10, wherein the reactive resin is selected from melamine-formaldehyde resins, urea-formaldehyde resins, melamine/urea-formaldehyde resins and gel precursors based on isocyanates and phenols.

12. A process for producing a porous material according to any of claims 1 to 11, wherein the reactive resin is brought into contact with the macroporous uncoated substrate and then cured to polymer B.

13. The process according to claim 12, comprising the following steps
a) the reactive resin is provided as a solution or dispersion in a liquid
b) a catalyst is added to the mixture obtained in the preceding step
c) the macroporous uncoated substrate is brought into contact with the mixture obtained in the preceding step
d) the mixture brought into contact with the substrate in the preceding step is cured in the presence of the substrate
e) the liquid present in the mixture is removed
the steps being carried out in the sequence a-b-c-d-e or a-c-b-d-e.

14. The process according to either of claims 12 and 13, wherein the bringing into contact in step c) is effected by immersing the uncoated substrate in the mixture.

15. The use of a porous material according to any of claims 1 to 11 as a filter for gases or liquids.

16. A filter comprising a porous material according to any of claims 1 to 11.

17. A process for filtering gases or liquids, wherein the gas or the liquid is passed through a material according to claims 1 to 11 or through a filter according to claim 16.

## Revendications

1. Matériau poreux contenant un substrat à base d'au moins un polymère organique A et un revêtement, dans lequel
i) le substrat non revêtu à base du polymère organique A est macroporeux,
ii) la surface du substrat macroporeux est revêtue avec un polymère B à base de résines réactives, et
iii) ce revêtement avec un polymère B est nanoporeux et le diamètre moyen des nanopores est d'au maximum 1 000 nm
et les matériaux d'enregistrement étant exclus.

2. Matériau poreux contenant un substrat à base d'au moins un polymère organique A et un revêtement, dans lequel
i) le substrat à base dudit au moins un polymère organique A est macroporeux et à cellules ouvertes,
ii) la surface des pores du substrat est revêtue avec au moins un polymère B à base de résines réactives, et
iii) le revêtement avec au moins un polymère B est nanoporeux et le diamètre moyen des nanopores est d'au maximum 1 000 nm et l'épaisseur moyenne de couche du revêtement est inférieure au diamètre moyen des pores du substrat non revêtu.

3. Matériau poreux selon la revendication 1 ou 2, **caractérisé en ce que** le revêtement couvre au moins partiellement la surface des pores du substrat.

4. Matériau poreux selon les revendications 1 à 3, **caractérisé en ce que** le revêtement présente une épaisseur moyenne de couche de 0,01 à 10 µm.

5. Matériau poreux selon les revendications 1 à 4, **caractérisé en ce qu'**au moins 20 % de la surface des pores du substrat sont couverts avec le polymère B.

6. Matériau poreux selon les revendications 1 à 5, **caractérisé en ce que** le substrat non revêtu consiste en une mousse à cellules ouvertes, un tissu, un non-tissé ou un papier filtre.

7. Matériau poreux selon les revendications 1 à 6, **caractérisé en ce que** le polymère A du substrat non revêtu est constitué de résines amino-aldéhyde ayant réagi, de résines phénol-aldéhyde ayant réagi, de polystyrène, poly(chlorure de vinyle), polyuréthannes, polyamides, polyesters, polyoléfines, cellulose ou de fibres à base de cellulose.

8. Matériau poreux selon les revendications 1 à 5, **caractérisé en ce que** le substrat non revêtu est choisi parmi des mousses à base de résines amino-aldéhyde, de résines phénol-aldéhyde et de polyuréthannes.

9. Matériau poreux selon les revendications 1 à 5, **caractérisé en ce que** le substrat non revêtu est choisi parmi des tissus ou des non-tissés à base de polyesters ou de cellulose.

10. Matériau poreux selon les revendications 1 à 9, **caractérisé en ce que** la résine réactive est choisie parmi des résines amino-aldéhyde, des résines phénol-aldéhyde et des précurseurs de gels à base d'isocyanates.

11. Matériau poreux selon les revendications 1 à 10, **caractérisé en ce que** la résine réactive est choisie parmi des résines mélamine-formaldéhyde, des résines urée-formaldéhyde, des résines mélamine/urée-formaldéhyde et des précurseurs de gels à base d'isocyanates et de phénols.

12. Procédé pour la fabrication d'un matériau poreux selon les revendications 1 à 11, **caractérisé en ce que** la résine réactive est mise en contact avec le substrat macroporeux non revêtu, et ensuite durcie en le polymère B.

13. Procédé selon la revendication 12, comprenant les étapes suivantes
a) la résine réactive est fournie sous forme de solution ou de dispersion dans un liquide
b) on ajoute un catalyseur au mélange obtenu dans l'étape précédente
c) on met en contact le substrat macroporeux non revêtu avec le mélange obtenu dans l'étape précédente
d) on fait durcir en présence du substrat le mélange mis en contact avec le substrat dans l'étape précédente
e) on élimine le liquide contenu dans le mélange,
les étapes étant effectuées dans l'ordre a-b-c-d-e ou a-c-b-d-e.

14. Procédé selon la revendication 12 ou 13, **caractérisé en ce que** dans l'étape c) on effectue la mise en contact par immersion du substrat non revêtu dans le mélange.

15. Utilisation d'un matériau poreux selon les revendications 1 à 11, en tant que filtre pour gaz ou liquides.

16. Filtre contenant un matériau poreux selon les revendications 1 à 11.

17. Procédé pour la filtration de gaz ou de liquides, **caractérisé en ce qu'**on fait passer le gaz ou le liquide à travers un matériau selon les revendications 1 à 11 ou à travers un filtre selon la revendication 16.
